# FASCICULE DE BREVET EUROPEEN

(11) **EP 4 001 096 B1**
(45) Date de publication et mention de la délivrance du brevet: **19.07.2023**
(21) Numéro de dépôt: 21020574.6
(22) Date de dépôt: 16.11.2021
(51) Int. Cl.: B64C 1/16, B64D 27/20, B64D 33/02, B64D 33/04, B62D 57/04, B62D 35/00, B63B 1/40, B63H 11/103, B64C 15/02, B63H 11/08, B63H 11/117

(54) **UNITÉS MOBILES À TRAINÉE TRÈS RÉDUITE, À ENTRÉES CANALISANTES MOTORISÉES**
MOBILE EINHEITEN MIT SEHR GERINGEM STRÖMUNGSWIDERSTAND UND MOTORISIERTEN KANALISIERENDEN EINLÄSSEN
MOBILE UNITS WITH VERY LOW DRAG, WITH MOTORISED CHANNELLING INTAKES

(30) Priorité: 17.11.2020 FR 2011614
(43) Date de publication de la demande: 25.05.2022
(73) Titulaire: Merrien, Jean Paul, 22000 Saint Brieuc (FR)
(72) Inventeur: Merrien, Jean Paul, 22000 Saint Brieuc (FR)
(74) Mandataire: Derriennic, Tangui Jean

(56) Documents cités:
- EP-A1- 3 318 494
- WO-A2-2009/153124
- JP-A- S63 279 990
- JP-A- 2000 247 295
- US-A- 5 438 947
- US-A1- 2016 039 477
- US-A1- 2018 127 089

## Description

### 1. Domaine de l'invention

Les innovations divulguées dans la présente demande de brevet sont relatives à des unités mobiles incorporant des motorisations totalement intégrées, dont les formes « fuselages » externes et internes sont optimisées en termes de ratio « perte de charge / vitesse de déplacement », qui permettent leur évolution améliorée en milieux aérauliques ou hydrauliques ou mixtes ; leurs caractéristiques de motorisation et de formes particulières étant adaptées à ces milieux en fonction des applications techniques envisagées sont telles qu'elles permettent une amélioration très nette du bilan énergétique global de leurs déplacements.

Ces dites unités mobiles ne sont en aucun cas assimilables à des objets mobiles appartenant à la catégorie des mobiles plus légers que l'air tels que les dirigeables et leurs dérivés car ils ne n'incorporent aucunement et en aucun cas de sacs à gaz à effet ascensionnel.

Lesdites unités mobiles innovantes, revendiquées sont conçues pour se déplacer essentiellement sur des trajectoires, s'appuyant sur leur axe principal longitudinal et sur leur prolongement par effet de tangence, et pour réduire très sensiblement les ratios « énergies dépensées / distances parcourues et/ou masses globales déplacées, rapportées aux plages de vitesses d'exploitation souhaitées ou « prévues » comparativement aux performances des unités mobiles connues dans les domaines d'applications comparables. Lesdites unités mobiles sont aussi remarquables pour leurs performances en termes de réduction des perturbations macromoléculaires, périphériques et frontales, générées dans la masse fluide traversée :
- dans un milieu aéraulique tel que l'air, et donc notamment en aéronautique, et pour des mobiles se déplaçant au sol, en « traces (perturbations) aérodynamiques et sonores » très sensiblement réduites,
- dans un milieu liquide tel que l'eau, et donc pour les mobiles dits « sous-marins » et pour les mobiles se déplaçant en milieu mixte « liquide et gazeux », exemple « navires de surface », en « traces (perturbations) hydrodynamiques et sonores » très réduites.

Les formes hydrauliques et aérauliques ou aéronautiques nouvelles décrites et celles qui s'en déduisent, pour un professionnel averti, font partie intégrante de la présente innovation divulguée, dans la mesure où elles entrent dans le cadre des revendications annexées.

Les unités mobiles connues « adaptées » conformément aux revendications de base formulées sont aussi décrites comme étant innovantes.

*

### 2. Art antérieur

Les objets mis en mouvement en milieu homogène fluide à forte viscosité tels que les liquides ou à faible viscosité tels que les gaz développent une trainée dans laquelle les énergies dépensées pour produire le mouvement de ces objets se transforment en agitations macro et micromoléculaires périphériques importants dont les énergies potentielles et cinétiques sont difficilement récupérables et dans la pratique très peu récupérées en amélioration de leurs performances énergétiques.

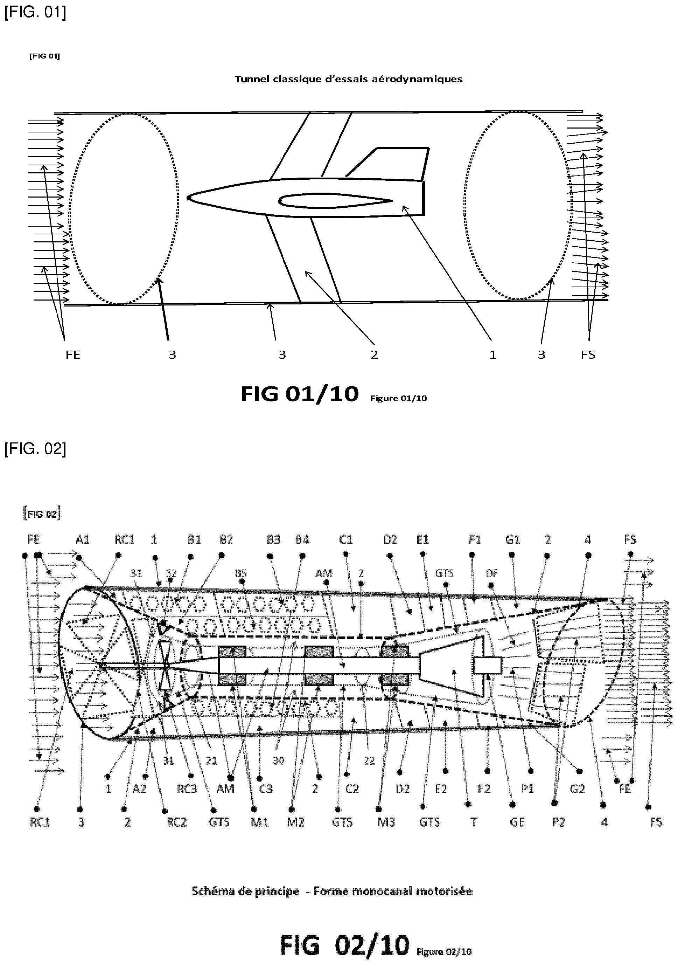

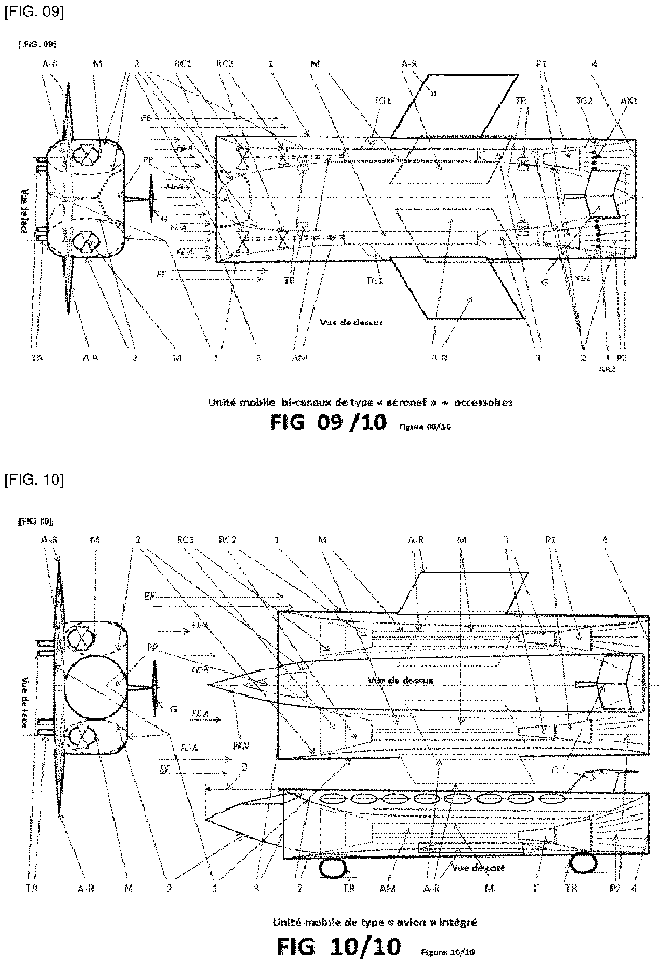

En général, les écoulements fluides du type « Tube de Venturi » sont toujours vus pour des structures externes fixes, statiques (voir Figure 01/10) qui servent de support à un canal fluide interne formant une première enveloppe externe fixe , de formes et sections intérieures variables ou constantes agrémentées d'objets mono-formes ou multiformes , mis en condition d'essai dans la veine fluide grâce à des supports :, dont on étudie le comportement aérodynamique ou hydraulique en vue de leur optimisation de « forme-profil » pour correspondre à un ou plusieurs critères (économique, vitesse, nuisance sonore, etc.).

Dans ce cadre, sont étudiées les caractéristiques des écoulements fluides perturbés par lesdits objets présentés à l'entrée du dispositif, à savoir : viscosité, pression, vitesse, température, etc. Les formes étudiées de la sorte sont soit relatives au conduit d'écoulement lui-même, l'enveloppe formant canal, soit, plus généralement, relatives aux objets placés dans ces écoulements fluides de façon à pouvoir étudier les variations de leurs trainées et les turbulences qu'ils génèrent par leur formes en faisant varier les paramètres caractéristiques des écoulements fluides sachant que ceux-ci peuvent être interdépendants selon les théories de la mécanique des fluides et des lois dites de « similitude » dans ces milieux.

Pour les objets placés au milieu de l'écoulement fluide pour une optimisation de leurs formes aérodynamiques ou hydrauliques, les composantes mécaniques et dimensionnelles des profils matérialisés par ces objets sont modifiées et adaptées au fur et à mesure des étapes de l'expérimentation vers l'optimisation recherchée.

L'ensemble des essais relatifs à l'optimisation des formes d'objets en termes de minimisation de leurs trainées aérodynamiques ou hydrauliques ne permettent pas de réduire « drastiquement » ces trainées en raison du fait que les ondes de pression et les flux porteurs de celles-ci sont en général « perdus » sur le plan énergétique, sans recherche de rendement global optimisé, dans la masse fluide ou liquide du milieu environnant d'évolution des dits objets.

Les objets mobiles connus dont les formes extérieures ont été étudiées afin que leurs traînées « fluidiques » soient améliorées, mis en mouvement dans leur environnement fluide d'exploitation, pénètrent la masse fluide en déplaçant, en général, une veine fluide de section très supérieure à leur plus grande section nette frontale (exemples : avions, automobiles, bateaux, ...). Ainsi ils génèrent dans la masse fluide environnante des ondes de pression et de vitesses qui, globalement, se traduisent par des déperditions énergétiques conséquentes qui ne peuvent être utilisées, récupérées, en termes d'amélioration du rendement énergétique du mouvement produit.

Ces objets mobiles sont développés dans tous les domaines de la vie courante et sont d'un usage constant ou exceptionnel, ce sont à titre d'exemples non limitatifs :
▪ pour l'hydraulique :
   ∘ les mobiles dits « sous-marins » et les objets à propulsion de la catégorie ex : les torpilles, les scooters sous-marins, les automates de recherche sous-marine, etc. La publication de brevet US 5 438 947 décrit un tunnel de passage interne disposé à l'intérieur d'un véhicule, reliant l'extrémité avant et l'extrémité arrière du véhicule, et lequel tunnel est représenté au pluriel. Les ouvertures avant et arrière du tunnel s'étendent sur toute la section transversale du véhicule.
▪ Pour l'aéraulique ou aéronautique :
   ∘ les avions et de façon générale tous les aéronefs à propulsion interne, exception faite des ballons « dirigeables » (voir ci-dessous),
   ∘ les mobiles terrestres en appui sur le sol, roulant ou glissant à propulsion par motorisation interne,
   ∘ les dirigeables pour lesquels l'objectif de capacités ascensionnelles lié aux volumes de gaz incorporés et stockés plus légers que l'air : Hélium, ou Hydrogène, ..., dans des sacs à gaz et les formes qui s'en déduisent font de ces objets des mobiles à « grand déplacement du milieu fluide environnant » rapporté aux masses propres « efficaces » à déplacer. Malgré leurs caractéristiques innovantes, ces objets mobiles (dirigeables) demeurent handicapés en termes d'expression cinétique et ne peuvent concurrencer les avions, même dans leur version « haute atmosphère » ou « stratosphérique ». Dans ces environnements à faible, voire très faible densité, les effets directionnels supposés développés sur ces « airships » par des accessoires connus et/ou dispositions associatives et/ou constructives innovantes deviennent inopérantes voir « sans efficacité démontrée »
▪ Pour l'hydraulique associée à l'aéraulique
   ∘ les mobiles dits de surface tels que les navires et bateaux à propulsion ou tractés, en appui sur la surface de l'eau, déplacent des volumes d'eau et d'air en créant une trainée à la fois hydrodynamique et aérodynamique mais aussi une trainée due à la formation des vagues et remous qui sont le résultat d'une interaction entre les milieux liquide et gazeux en contact, mis en mouvement turbulent du fait du déplacement des dits mobiles sous l'impulsion de forces motrices développées par une motorisation interne

### 3. Exposé de l'invention

La présente invention a pour objet de réduire drastiquement les déperditions énergétiques des catégories de mobiles ci-dessus mentionnées et propose une famille d'unités mobiles selon les revendications annexées, destinées à se déplacer dans un fluide liquide, gazeux ou mixte qui se présentent comme un ensemble structuré (exemples schématiques simplifiés - voir figures 02/10 et 04/10) dont les composantes de base sont indissociables et comprennent :
▪ A-
   ▪ Une enveloppe « fuselage » externe Rep 1, à faible variation de section, diminuant en général légèrement de l'avant vers l'arrière, donc de faible conicité, voir cylindrique, telle qu'elle absorbe par dépression le maximum des masses fluides concernées par les effets de décollements laminaires générées par le déplacement des dites unités mobiles, et telle qu'elle ne déplace qu'un minimum de masse fluidique environnante, avec une traînée périmétrique minimale ; ces enveloppes « fuselage » sont de sections quelconques, notamment autres que circulaires et aplaties sur la partie inférieure dite face 'ventrale', de longueur finie supérieure à la plus grande dimension transversale nette des dites enveloppes « fuselage »; les dites formes externes très aplaties, dans le domaine aéraulique notamment mais aussi en hydraulique, contribuent, en fonction des vitesses de déplacement, à développer sur cette dite partie ventrale inférieure , pour une inclinaison à angle même relativement faible de l'axe de la dite unité mobile sur l'axe de la trajectoire suivie, pilotée, une surpression par rapport à celle existant dans l'environnement traversé, et par effet inverse une dépression quasi symétrique sur la surface dorsale de la dite enveloppe extérieure ; la résultante de ces pressions différentielles opposées ventrales et dorsales, appliquées à la totalité des surfaces concernées, en terme de forces auxquelles il faut enlever la force de la pesanteur, se traduit par un effet ascensionnel qui permet à la dite unité mobile de se mouvoir en montée; inversement si l'angle d'inclinaison de la dite unité sur l'axe de sa trajectoire est piloté pour devenir négatif, les dites pressions ventrales et dorsales s'inversent et en terme de forces résultantes, l'effet ascensionnel devient un effet de poussée inversé qui s'ajoute à la force de la pesanteur, contribuant à la descente de la dite unité mobile. Autrement dit lesdites formes « fuselage » décrites sont capables de développer une force résultante dite de « portance propre » telle que lesdites unités mobiles associées aient une capacité à se déplacer perpendiculairement aux écoulements fluides qu'elles traversent. A titre d'exemples non limitatif voir les Figures .03 et 04 /10 de formes « fuselage » qui permettent le développement de telles forces de portance. Lesdites unités mobiles, revendiquées, appliquées à l'aéraulique, dans leurs formes « fuselage » aplaties, très aplaties ou plates en face ventrale, présenteront, en raccordement longitudinal des faces ventrales et dorsales un bord progressivement relevé (ou abaissé) prolongeant la jonction des dites faces pour former un profil de section transversale nette aussi faible que possible ayant une forme d'arête fine dite « winglet » dont la longueur s'étendra depuis l'avant jusque l'arrière des dites unités mobiles, qui se développe progressivement d'une valeur nulle à l'avant( section frontale) jusqu'à atteindre sa valeur maximale à hauteur de la terminaison arrière de .l'enveloppe fuselage ; cette forme « ajoutée » à l'enveloppe fuselage externe peut aussi se décliner comme étant un dispositif rétractable et escamotable. Ces formes « winglets » atténuent les turbulences rotationnelles de type « Vortex » qui se forment notamment en bout d'ailes d'avions ; elles sont donc un complément technique utile voir indispensable pour la définition des formes « fuselages » externes associées aux mobiles nouveaux décrits.
   ▪ B -
      ▪ L' enveloppe « fuselage » externe Rep1 à faible variation de section, décrite ci-dessus incorpore indissociablement , plusieurs ou une pluralité de canaux «fluidiques » internes Rep 2C1, Rep 2C2, Rep 2C3, Rep 2C4, traversant longitudinalement les dites unités mobiles ; lesdits canaux internes étant configurés de sorte que la somme de leurs sections « entrantes-frontales » est égale à la section nette frontale de la dite unité mobile et que la somme de leurs sections « arrière de sortie » soit égale à la section nette « arrière »de l'enveloppe « fuselage » qui les incorpore ; ces dits canaux fluidiques internes sont globalement motorisés pour assurer la circulation « certaine », assurée, de la « totalité » de la veine fluide frontale s'opposant au déplacement de ladite unité mobile à travers le milieu fluide environnant, de sorte que les vitesses et les pressions des flux globalisant l'ensemble des veines fluides sortant de ces dits canaux internes, sous l'impulsion d'un ensemble de motorisations appropriées, soient supérieures à la vitesse et à la pression du flux global entrant dans les dits canaux internes.
         - La surcapacité énergétique emmagasinée dans le flux global sortant comparée à l'énergie strictement nécessaire à faire admettre la globalité du flux frontal entrant dans les dits canaux internes, fournie par les dites motorisations internes, donne aux dites unités mobiles de réelles capacités à se mouvoir à des vitesses et accélérations qui dépendent des poids propres (massiques) de construction, des résistances fluidiques qu'elles génèrent et des forces propulsives résultantes disponibles .
         - lesdits canaux internes Rep2 ou Rep 2C1, Rep 2C2, Rep 2C3, Rep 2C4 comprennent chacun successivement une portion d'entrée de section convergente adaptée à l'incorporation de dispositifs « accélérateurs et/ou compresseurs » du flux « entrant », une portion intermédiaire de section sensiblement constante adaptée à l'incorporation totalement internalisée de dispositifs propulsifs (et/ou de motorisation) et une portion de sortie de section divergente, adaptée au développement de solutions techniques permettant la maîtrise des flux propulsifs au moment de leur éjection « arrière » dans le milieu fluide environnant traversé . Ces portions dont les longueurs relatives peuvent être variables, sont conçues avec une possibilité de se raccorder entre elles à l'intérieur même des dites unités mobiles, et se raccordent aux sections « avant » et « arrière » de l'enveloppe externe pour constituer :
            ∘ plusieurs ou une multitude de sous-canaux fluidiques internes, à écoulement interne optimisé permettant le passage de la « totalité » de la veine fluide captée par la section globale « avant » de l'ensemble constitué, et conduite jusqu'à la section « arrière » du même ensemble. Vus globalement, ces canaux fluidiques sont tels que la somme de leurs sections efficaces en termes de continuité fluidique est, en se déplaçant depuis l'avant vers l'arrière des « fuselages internes » associés, d'abord convergente, puis sensiblement constante en y incorporant les dits dispositifs propulsifs, puis divergente. La continuité fluidique des dits canaux au regard des sections variables supposées par leur construction est telle que les rapports des dites sections successives répondent aux lois de la dynamique des fluides reliant les données : débits, sections de passage, vitesses, pressions et températures (effet Venturi), en tenant compte des apports énergétiques, dynamiques et thermodynamique des motorisations associées.
            ∘ Ces dits canaux fluidiques internes, selon une disposition constructive, peuvent se scinder en sous canaux de longueurs inférieures ou égales aux longueurs des trois portions principales, en respectant le principe de la continuité fluidique décrit ci-dessus, afin de créer des circulations fluidiques spécialisées qui peuvent servir d'écrans ou de boucliers internes thermiques, vibratoires ou sonores générés par les dispositifs propulsifs internes. Ces sous-canaux fluidiques peuvent aussi être utilisés pour guider une partie du flux 'entrant' jusqu' à la troisième partie « divergente » des dits canaux internes pour constituer un double flux secondaire.
            ∘ Ces dits canaux fluidiques, en interne, ne sont pas nécessairement indépendants depuis la section d'entrée jusqu'à la section de sortie, les flux qu'ils conduisent peuvent se mélanger ou se dissocier suivants les effets fluidiques internes recherchés pour optimiser le fonctionnement global des dites unités mobiles.
            ∘ Les entrées de ces dits canaux fluidiques internes sont telles que la somme de leurs sections nettes sont quasiment égales à la section nette de l'avant de « l'enveloppe fuselage externe » décrite ci-dessus.
            ∘ Les entrées de ces canaux fluides internes, en amont de la section la plus avancée de l'enveloppe « fuselage » externe décrite ci-dessus, sont dégagées de tout dispositif complémentaire de guidage de la ou des veines fluides entrant frontalement dans les dites unités mobiles, afin que la totalité du fluide concerné puisse y pénétrer sans générer de forces latérales ou de turbulences.
            ∘ La divergence de la troisième partie des canaux fluidiques internes est adaptée à l'incorporation de dispositifs capteurs d'énergie et de parallélisation des flux traversant et s'atténue pour tendre vers zéro au niveau de la section de raccordement du dit au moins un canal interne (ou desdits canaux lorsqu'ils sont multiples) avec la terminaison de l'enveloppe « fuselage » externe de ladite unité mobile ; ce raccordement est quasi tangentiel afin de minimiser les turbulences entre flux internes traversant et le flux externe enveloppant, à ce point de confluence ( jonction) en extrémité arrière de la dite unité mobile.
            ∘ Les sorties des dits canaux internes sont telles que la somme de leurs sections nettes sont quasiment égales à la section nette de la partie terminale 'arrière' de l'enveloppe « fuselage » écrite ci-dessus.
            ∘ Les sorties de ces canaux fluides internes, à hauteur de la section nette la plus reculée de l'enveloppe « fuselage » externe décrite ci-dessus, sont dégagées de tout dispositif complémentaire de guidage de la ou des veines fluides sortant de ladite unité mobile. Les dispositifs de guidage des dites veines fluides, au moment de leur éjection à l'arrière des dites unités mobiles, sont totalement internes et participent au développement des forces de poussée par effets de pression et/ou de vitesse « non axiales » au regard de l'axe longitudinal principal des dites unités, qui contribuent ainsi au changement de direction des dites unités mobiles le long d'une trajectoire imposée.
▪ C-

Dans les unités mobiles connues de l'art antérieur (voitures automobiles, bateaux, avions, par exemple), le fluide s'opposant à l'avancement de l'unité mobile est évacué et dévié totalement ou majoritairement « autour » de l'unité mobile et crée ainsi une trainée dynamique importante dont notamment une dépression arrière qui se traduit par un frein à l'avancement. Il en résulte donc de fortes pertes énergétiques et des désagréments acoustiques dépendant des turbulences et variations de pression et vitesses créées dans le milieu fluide environnant traversé.

Les unités mobiles innovantes décrites proposent de « capter par un effet de dépression fluidique maîtrisée, généré par des accélérateurs internes de flux animés, actionnés par une motorisation interne adaptée, auto adaptative, efficace, la « totalité » du fluide (veine fluide « avant ») s'opposant à l'avancement de l'unité mobile », plutôt que de l'évacuer par déviation autour de cette dernière, sans pour autant « augmenter significativement» la section nette des dites unités et donc la section nette des dits fuselages externes. Ainsi, en captant la totalité du fluide s'opposant à l'avancement des dites unités mobiles et en faisant passer le fluide environnant « frontal » dans une pluralité de ces dits canaux internes, présentant une forme particulière, adaptée, permettant d'obtenir une circulation fluide proche de celle obtenue en Tube dit de « Venturi », on améliore de façon très importante les performances globales énergétiques et acoustiques des dites unités mobiles :
∘ D'une part, dans le milieu fluide environnant, les dites unités mobiles revendiquées ne créent qu'une faible, voire très faible perturbation en compression et déplacement des couches fluides enveloppantes externes quelle que soit la vitesse de déplacement car:
   ▪ L'enveloppe « fuselage » externe qui les définit extérieurement, de sections quasi constante ou en faibles diminutions de sections « avant-arrière » ne produit qu'une faible (voir nulle) trainée périphérique
   ▪ La puissance de la motorisation interne, développée par des groupes propulsifs, est « auto-adaptée » par asservissements pilotés par l'intermédiaire de capteurs (Rep CPA ) de « pression-dépression » montés au niveau de la section entrante « avant » et permet, par l'action de dispositifs « ventilo-compresseurs » asservis, connectés aux dites motorisations, d'éviter le refoulement « avant » externe du fluide s'opposant au déplacement des dites unités mobiles.

Cette particularité constructive innovante qui évite la formation d'ondes de pression « avant » et latérales externes indépendamment de la vitesse de déplacement des dites unités mobiles, permet la construction d'unités mobiles en capacité de s'affranchir des effets d'ondes de compression « avant » externes telle que constatées en particulier, en franchissement du dit « mur du son » pour un fluide traversé tel que l'air. En outre, les particularités constructives d'association d'un enveloppe « fuselage » externe de section quasi-constante, ou à faible conicité longitudinale, à des canaux fluidiques internes motorisés, absorbeurs de flux frontal qui évitent le refoulement externe de ce flux le long de l'enveloppe « fuselage » externe, qui produisent un flux global dont l'énergie propulsive est augmentée, permettent la constitution, la conception d'unités mobiles nouvelles dont les trainées de tous ordres sont très réduites, voir minimales.
▪ Les dites unités mobiles revendiquées, conçues pour absorber la « totalité » de la veine fluide frontale s'opposant à leur déplacement, permettent la conception de vecteurs (mobiles) de transport, moins énergivores et moins perturbants ( en particulier au plan sonore) que ceux actuellement développés ( ex : avions en tous genres, véhicules terrestres, bateaux, ...), dont les vitesses d'exploitation peuvent être améliorées, notamment dans le domaine aéronautique avec des vitesses supérieures à celle dite du « mur du son», sans effet similaire au franchissement de cette limite par les mobiles connus à ce jour. Ces unités mobiles à déplacement essentiellement « longitudinal et axial » ne peuvent en aucun point de comparaison être assimilées à des « dirigeables » connus pour leur capacité à se déplacer verticalement, puis horizontalement en restant handicapés par les sections très importantes des sacs à gaz qu'ils incorporent.

D'autre part, le fluide capté par la section « avant » des dites unités mobiles passe dans plusieurs canaux et ressort de ces derniers à une pression et une vitesse supérieures à celles qu'il avait à l'entrée de ladite unité mobile quelle que soit la vitesse propre de celle-ci. Comme indiqué ci-dessus, les portions d'entrée, intermédiaire et de sortie des canaux internes de passage du fluide se comportent comme des canaux hydrauliques, aérauliques, ou mixtes, forment un assemblage de composants qui, globalement, répond au principe du « Tube dit de Venturi » et les fluides qui y sont admis sont soumis aux lois d'écoulements fluides dites de Bernoulli et donc aux lois d'écoulements fluides à faibles, moyennes et/ou grandes ou très grandes vitesses notamment dites « supersoniques » applicables en aéraulique, alors que les dites ondes de pression sont totalement absorbées par les dits canaux internes.

Ces canaux internes (pouvant être appelés « conduits fluidiques » dans la suite de la description) de sections successives convergentes puis divergentes, sont conçus et profilés au plan aéraulique, ou hydraulique, ou en écoulement mixte (liquide-gaz) de façon à générer le minimum de pertes internes d'énergie par effet de turbulences et à minimiser les effets de cavitation suivant les vitesses d'écoulement du fluide.

En applications aérauliques, selon un aspect particulier de l'invention, ledit/les dits ensembles propulsifs incorporent un équipement d'accélération (action « ventilateur ») et de compression (action « compresseur ») du fluide entrant dans la zone « canal » amont de chaque ensemble propulsif.
∘ Les énergies cinétique (vitesse) et/ou potentielle de pression développée dès l'entrée dans la première partie convergente de ces conduits fluidiques par mise en vitesses et en pressions croissantes sous l'action développée par les groupes propulsifs incorporés, lesquels actionnent une pluralité d'accélérateurs de flux et/ou de « ventilateurs-compresseurs » ` avant' ou frontaux (exemples très schématiques : Rep RC1-RC2-RC3 ou Rep AF) , lesquels peuvent être étagés et donc à action par paliers de vitesses et/ou de pression», sont stockées dans le fluide pénétrant dans la section intermédiaire des dits conduits fluidiques. Ces énergies sont ensuite augmentées d'un nouveau palier sous l'action directe (ex : effet thermique par combustion de propergols ou autres carburants, ...) de ce ou ces groupes propulsifs (exemples très schématique : Rep M) agissant dans la partie centrale et dont l'effet se manifeste plus particulièrement dans la partie centrale « arrière » de ces conduits fluidiques. Cette énergie globale acquise par le flux entrant, passé dans le/les groupes propulsifs, est libérée sous la forme d'énergie cinétique et/ou de décompression dans la troisième partie divergente de ces conduits en développant :
   ▪ sur un dispositif de type « turbine », une force « motrice » qui est mise à profit pour actionner les « ventilo-compresseurs » précités et tout ou partie des dispositifs internes de commandes (électriques, hydrauliques, ...) nécessaires pour assurer les fonctions internes, notamment de guidage et de contrôle des dites unités mobiles.
   ▪ sur les parois internes de formes divergentes une force résultante de contre réaction par pression et,
   ▪ sur le fluide environnant périphérique rejoint et jonctionné à leur sortie de l'unité mobile, une force de contre-réaction cinétique et une force résultant de l'équilibrage des pressions, globalement propulsives.

En applications hydrauliques, les dits dispositifs « accélérateurs de débit » sont des « pompes-turbines » qui absorbent de manière contrôlée la totalité du fluide de la zone frontale « avant ». Les groupes propulsifs agissent sur un fluide que l'on peut considérer comme étant peu compressible (voir incompressible) et qui ne peut être mis en jeu dans une réaction exothermique. Les mises en dépression « avant » de la première partie convergente des conduits fluidiques internes se feront sous l'action de turbines (ex : hélices...) actionnées par un ou plusieurs dispositifs moteurs internes, à actions étagées agissant en « accélérateurs - compresseurs » de flux ( exemple schématique : Rep AF1-AF2- AF3- AF4 -AF5 ) (vitesse et pression) dont la puissance est telle que la veine frontale « avant » du fluide environnant, s'opposant à l'avancée de la dite unité mobile, soit « totalement absorbée » par le ou les conduits fluidiques mis en oeuvre. Le ou les flux aspirés et poussés de la sorte jusque dans la partie intermédiaire des dits conduits internes sont à « hautes vitesses et pressions » sur une partie de la longueur imposée par la constitution structurelle de l'unité mobile ; ces conduits internes intermédiaires peuvent ensuite, être eux-mêmes équipés de dispositifs propulseurs (pompes, vis, ...) actionnés par un ou plusieurs dispositifs moteurs internes (électriques, thermiques, ...), les mêmes ou différents de ceux qui actionnent les hélices précitées, lesquels augmentent en un ou plusieurs points la vitesse et la pression du / des flux traversant. La qualité hydrodynamique des dispositifs mis en oeuvre sera telle qu'elle ne créera en aucun cas de phénomènes de cavitation. En troisième partie, divergente des conduits fluidiques internes, le/ les flux, mis en sortie à hautes vitesses et pression des sections intermédiaires des conduits fluidiques, seront t ralentis et dépressurisés dans un « diffuseur-stabilisateur-parallélisateur » de flux qui minimisera les turbulences macroscopiques, réduira les gradients de vitesses et pressions dans des proportions telles que le flux total en éjection à l'arrière de la dite unité mobile sera contrôlé, en pression relativement proche de la pression environnante (minimisation des effets de turbulence d'éjection) et à une vitesse adaptée à celle souhaitée pour assurer, par contre réaction sur le milieu environnant de sortie, la vitesse d'évolution souhaitée de la dite unité mobile. La section globale de sortie du flux (admis à l'avant, puis accéléré, puis ralenti) sera sensiblement égale à la section d'entrée de sorte que la totalité de la veine fluide éjectée contribue à l'effet de poussée et vitesse recherchée en ne créant qu'un minimum de turbulences sous forme de traînée turbulente qui seraient la traduction d'une dissipation énergétique mal maîtrisée. Pour certaines applications hydrauliques, lesdits conduits fluidiques ainsi que les dispositifs de propulsion hydrauliques seront construits en recherche optimale d'une minimisation des vibrations mécaniques, acoustiques, de sorte que la signature « trace hydraulique » de ces dispositifs internes se conjugue à la qualité hydrodynamique de l'enveloppe « fuselage » externe. Ces particularités constructives, pour certaines applications permettent le développement d'unités mobiles nouvelles dont la trace acoustique globale tend vers un minimum.

En applications hydrauliques et en milieux mixtes (ex : air-eau) la zone immédiate, interne qui précède l'éjection fluide dans le milieu fluide environnant sera équipée de dispositifs « internes » déflecteurs de flux, asservis aux commandes des dites unités mobiles (exemple Rep P1 et P2 ); Ces dispositifs développent des forces non axiales qui contribuent soit au guidage des dites unités (gouvernail), soit à leur déjaugeage (effet « foil »), soit à leur stabilité (antiroulis). Lesdits conduits fluidiques, dans leur troisième partie, divergente, seront conçus de manière à conduire le maximum de flux éjecté dans le milieu environnant dans sa composante dont la densité est la plus importante, c'est-à-dire l'eau, mais aussi dans la zone dont la pression relative est la plus importante, donc le plus possible en profondeur, tout en respectant le principe de la parallélisation des flux traversant et environnant des dites unités mobiles. Pour des applications à moyennes et hautes vitesses de ces mobiles, des « sous-canaux » spécifiques à entrées pilotées par déflecteurs asservis à la détection du niveau de l'eau, seront mis en oeuvre.

Selon un aspect particulier de l'invention, lesdits canaux fluidiques internes s'étendent de l'avant à l'arrière des dites unités mobiles, globalement suivant l'axe de déplacement de ladite unité mobile sans pour autant être nécessairement centrés au droit des sections de l'enveloppe « fuselage » externe ou strictement parallèles par tronçon à l'axe de cette enveloppe « fuselage » externe. Leurs sections d'entrée à l'avant de l'unité mobile sont globalement orientées perpendiculairement à l'axe de déplacement de l'unité mobile de sorte que le ou les canaux internes sont aptes à capter le maximum, voir « la quasi-totalité » du fluide environnant s'opposant frontalement à l'avancement de ladite unité mobile, (en principe : la totalité de ce fluide).

Les dispositifs propulsifs internes qui équipent ces unités mobiles seront dimensionnés de sorte que la totalité de la veine fluide 'entrante' soit mise en dépression « avant » par rapport à la pression considérée comme constante du fluide environnant traversé par les dites unités mobiles lorsque ces dites unités mobiles sont en accélération ou en déplacement à vitesse constante. Le principe de la mise en dépression « avant » contrôlée des dites unités mobiles n'est plus nécessairement mis en action dans le cas des décélérations (diminution de vitesse) des dites unités. Lesdits dispositifs propulsifs internes, sans déroger au principe de l'absorption de l'intégralité de la veine fluide frontale s'opposant au déplacement des dites unités mobiles, seront optimisés de façon à n'introduire dans le processus de motorisation interne suivant la vitesse instantanée souhaitée qu'une partie ou la totalité du fluide entrant admis, l'autre partie étant néanmoins guidée et canalisée pour amortir les effets thermiques, sonores et de turbulence générés par les motorisations des groupes propulsifs internes.

Selon un autre aspect particulier de l'invention, ledit/lesdits canaux internes comprennent, dans leur portion de sortie « divergente », une pluralité de dispositifs internes de parallélisation et/ ou de stabilisation du fluide. Ces dispositifs ne sont en aucun cas 'déportés' à l'extérieur de la partie divergente finale des dits canaux fluidiques internes, ni déportés au-delà de la section finale arrière du corps du « fuselage » externe ; ils ne peuvent être comparés en terme d'efficacité aux dispositifs coniques revendiqués comme innovants cf. Brevet « US2013/0256459 A1 » *les quels, constitués en sacs à gaz, freinent, en réalité, notablement le flux d'air admissible et*/*ou introduit dans le canal interne de tels « dirigeables »* ; les quels dispositifs ne sont pas revendiqués pour contribuer à la stabilisation ou à la parallélisation des flux conduits en interne dans les dits dirigeables.

Les dispositifs de parallélisation, décrits ci-dessous, dont la section nette 'matière' qui entrave le passage du flux est aussi réduite que possible ( ex : cloisons montées dans le sens d'écoulement des flux internes), se présentent, à un premier niveau , sous la forme de conduits parallèles, plus ou moins serrés, montés par exemple en forme de « nids d'abeille » conçus pour résister aux effets thermiques : ( ex : Diffuseurs (Ex : Rep DF)), mécaniques et vibratoires développés sur ou dans la ou les veines fluides par le ou les groupes propulsifs, puis à un second niveau, d'ensembles de volets montés pivotant autour d'axes (Exemple schématique simplifié : Rep AX1 et AX2 ) dont la rotation est contrôlée par un dispositif central de stabilisation de l'unité mobile agissant, à la sortie de la veine fluide traversante, immédiatement avant son éjection dans le milieu environnant (Rep P1 et P2 ). Ces dispositifs contribuent à la parallélisation du flux traversant et sortant du ou des groupes propulsifs de façon à minimiser la trace turbulente, vibratoire et sonore globale de la veine fluide sortante ( Rep FS ) expulsée au regard de sa pénétration 'arrière' dans le fluide environnant (Ex : Rep FE ). Ces dispositifs de parallélisation permettent également d'optimiser l'effet de poussée arrière dans le gabarit strict et total de la veine fluide extérieure délimitée par l'arrière de l'enveloppe « fuselage » externe Rep 1.

Les dimensions de ces dispositifs propulsifs peuvent varier de sorte que le flux de fluide situé au centre du ou des canaux (par exemple dans le cas d'une motorisation thermique, c'est la position la plus turbulente et la plus chaude) soit maîtrisé, et de façon à minimiser les effets sonores et vibratoires mais aussi environnementaux sur le fluide extérieur à l'arrière de l'unité mobile ; dans le cas d'applications aérauliques, ces effets sont en partie réduits par la maîtrise de la combustion complète des carburants utilisés, ceci étant rendu possible par la longueur relative, adaptée de la section centrale des dits canaux fluidiques dédiée à la motorisation.

L'intégration longitudinale interne des motorisations dans la partie centrale des dits conduits fluidiques décrits, implique, en aéraulique, un allongement significatif de la zone de « réaction thermique et exothermique » de la motorisation contrairement à l'effet de densification énergétique recherché dans les réacteurs et turboréacteurs mis en oeuvre sur les avions en service à ce jour « 2020 ». Cet allongement permet de minimiser les effets quasi- « explosifs » de réaction exothermique de combustion du carburant utilisé (Kérosène ou autres propergols), de réduire les contraintes mécaniques thermiques et sonores développées tout en assurant une meilleure combustion des carburants mis en oeuvre. Cet allongement permet, par ses avantages, de rendre acceptable l'intégration de ces dispositifs de motorisation à l'intérieur même des structures canalisées des dites unités mobiles.

La conception « multicanaux » proposée, innovante, qui consiste à permettre la circulation d'une partie du fluide admis frontalement : celle qui ne participe pas nécessairement à la combustion dans les dispositifs propulseurs, dans un ou plusieurs canaux concentriques à la veine fluide principale admise dans les dispositifs propulsifs, est mise à contribution pour contrôler les émissions radiales sonores et thermiques autour des propulseurs de façon à évacuer les flux thermiques et sonores correspondants et amortir grandement leur impact sur les compartiments périphériques et leur transmission dans les composants qui structurent les dites unités mobiles autour des dits conduits fluidiques internes. Ainsi de manière relative et contrôlée lesdites unités mobiles sont conçues pour neutraliser les effets négatifs, sonores et vibratoires liés à l'incorporation globale des dispositifs propulsifs au sein même des dites unités mobiles. La conception des dits canaux fluidiques internes prendra en compte les effets de dilatation différentielle des composants mis en oeuvre, notamment de motorisation, sur toute la longueur, ou une partie longitudinale significative, des dits canaux.

Les profils internes de terminaison des dits canaux fluidiques se raccordent quasi-tangentiellement au profil de terminaison de l'enveloppe « fuselage » externe de façon à réduire les turbulences périphériques à la sortie des dits canaux fluidiques. Cette disposition constructive est à mettre en comparaison quasi-symétrique de la disposition constructive revendiquée du bord d'attaque de l'entrée frontale du fluide décrite plus bas dans ce texte. Afin de réduire l'effet de choc fluidique de pénétration de la/ des veines fluides internes dans l'environnement fluide périphérique dans la zone terminale de l'enveloppe « fuselage » externe, le profil de cette zone terminale sera adapté afin de minimiser les turbulences et perturbations sonores dans cette zone spécifique, par exemple en présentant un profil 'arrière,' différent d'une section nette de l'enveloppe « fuselage » par un plan perpendiculaire , mais au contraire proche d'une forme autre continue et par exemple « sinusoïdale » ou en « zig-zag ». (A titre de comparaison, les enveloppes externes des réacteurs d'avions se terminent par un profil de forme vaguement sinusoïdal).

Les longueurs relatives, les sections nettes importantes mises en oeuvre dans lesdites unités mobiles dans la troisième partie divergente des dits canaux internes, ainsi que les dispositifs de stabilisation de flux, permettent de développer, en sortie extrême de ces dits canaux, un flux dont les gradients de vitesses, de pressions et de températures sont très nettement mieux maîtrisés qu'aux sorties des réacteurs d'avions en exploitation à ce jour (2020). Leurs flux maîtrisés agissant sur la totalité de la section nette d'éjection dans le milieu environnant, égale à la section nette de l'enveloppe « fuselage » externe, permet le développement d'une zone d'action propulsive « arrière » efficace proche de 100% ; comparativement, les réacteurs connus d'avions ont une section nette de poussée, réduite (à la sortie des dits réacteurs), voire très réduite, au regard de la section nette de carlingue/fuselage des aéronefs qu'ils propulsent. La différenciation des zones de poussée et des sections nettes (notamment fuselages) mises en oeuvre sur les avions en exploitation à ce jour (2020) justifie la nécessité de zones de poussée à très hautes vitesses dont les gradients de températures et de pression sont très importants, non maîtrisés, avec des taux d'imbrulés « non négligeables », lesquels génèrent des pollutions notoires, des turbulences importantes mixées aux turbulences de portance (Vortex en bout d'ailes), des vibrations sonores de moins en moins admises et tolérées sur le plan environnemental, et la formation de trainées de vapeurs d'eau (qui se cristallisent en haute altitude en se développant autour des microparticules « carbonées et sulfuriques» d'imbrulés), lesquelles sont considérées comme une manifestation de pollution atmosphérique de moins en moins 'acceptable'.

Les effets de type 'postcombustion' ou similaires « externes », connus dans les réacteurs de propulsion classique d'aéronefs, peuvent aussi être totalement ou grandement supprimés dans lesdites unités mobiles revendiquées compte tenu des grandes sections nettes 'avant' et 'arrière' exploitées. En ce sens, les dits groupes propulsifs, totalement intégrés dans la structure longitudinale des dites unités mobiles, peuvent, en applications « aérauliques », être conçus avec intégration de modules de contrôle de la combustion progressive et complète du carburant utilisé, comme en mode 'post-combustion', mais aussi être conçus pour se transformer en groupes inverseurs de poussée qui peuvent contribuer efficacement au freinage des dites unités mobiles dans les phases de réduction de vitesses et d'atterrissage en particulier.

En applications aérauliques, les veines fluides canalisées à l'entrée de la partie intermédiaire du/des canaux fluides internes qui ne sont pas mises en oeuvre dans le processus de développement de la puissance instantanée souhaitée, sont réparties en zones d'écoulement périphérique autour de la /des veines internes qui participent directement au dit processus de motorisation. Cette distribution du fluide participant directement au processus de motorisation est assurée par un jeu de volets concentriques internes spécifiques (Exemple schématique : Rep 32 ) placés immédiatement à l'entrée (Ex: Rep 31) des dispositifs propulsifs, ou étagés le long de la partie intermédiaire des canaux fluidiques internes en cas de motorisations « étagées », pilotés automatiquement en fonction de la demande instantanée de puissance souhaitée et en même temps que l'injection du carburant dans le processus de motorisation. Cette injection, pour permettre une combustion complète, se fera après une préchauffe efficace du dit carburant, telle qu'aux points d'injection ce carburant passe instantanément d'une phase liquide « sous haute pression » à une phase gazeuse sans particules liquides pour assurer un mélange optimal avec l'air compressé admis dans les chambres de combustion. Cette mise en phase gazeuse du carburant au moment même de son introduction en chambre de combustion, avant que les transferts thermiques de réaction de combustion ne prennent effet, évite la formation de particules d'imbrulés. Cette particularité innovante d'exploitation « gazeuse » des carburants, appliquées aux motorisations telles que décrites et adaptées aux dites unités mobiles développées dans le domaine aéronautique est revendiquée.

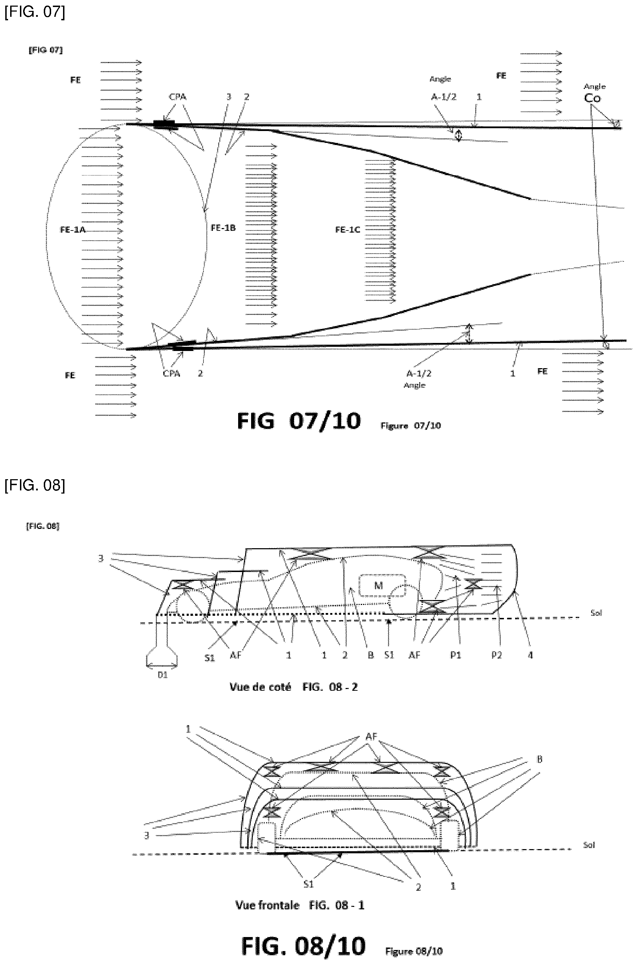

La forme théorique de ladite enveloppe « fuselage » externe permet de minimiser les perturbations créées par le déplacement de l'unité mobile dans l'environnement fluide et de minimiser les pertes de charges induites ; elle serait de section constante dans le cas de vitesses relatives faibles de déplacement de la dite unité mobile dans le milieu fluide environnant. Cependant la pratique, la simulation et le calcul montrent que, plus les vitesses relatives augmentent, plus les écoulements laminaires externes de contact prennent de l'importance, se transforment progressivement en couches à écoulement turbulent qui freinent le déplacement d'une telle unité mobile. Afin de minimiser l'effet de foisonnement externe de ces écoulements laminaires devenant turbulents, la section nette de cette enveloppe « fuselage » externe est progressivement réduite depuis l'avant jusqu'à l'arrière de ladite unité mobile de façon à permettre l'agrégation progressive de nouvelles masses fluides externes en écoulement laminaire se superposant à celles qui auraient tendance à devenir turbulentes. Cette particularité (voir Figure 07) se traduit par une forme très légèrement « conique » à sections progressivement réduites, dégressives depuis l'avant jusqu'à l'arrière de l'enveloppe « fuselage » externe (voir angle Rep Co).

Selon un aspect particulier, l'assemblage participant à la naissance du/des conduits fluidiques internes au droit de l'avant de l'enveloppe « fuselage » externe (voir Figure 07), c'est-à-dire l'extrémité située le plus en amont de ladite unité mobile, présente un « bord d'attaque » pour l'entrée du fluide dans ledit ou les dits canaux internes ayant en section longitudinale, un angle interne (Ex : Rep A-1/2 ) aussi faible que possible, adapté à la technologie des matériaux utilisés entre la surface extérieure de l'enveloppe «fuselage » externe de l'unité mobile et la portion d'entrée correspondante du dit ou desdits canaux internes. Ce/ ces bords d'attaque, en forme de profilé à angle d'attaque aiguë de valeur angulaire aussi faible que technologiquement possible, sont immédiatement prolongés par une structure portante qui assure la progressivité de la convergence de la première partie « entrante » des dits conduits fluidiques et la continuité « externe » en section d'abord constante, puis immédiatement et progressivement « en très faible réduction » de section, de la première partie de l'enveloppe « fuselage » externe, (laquelle est, sur toute sa longueur de relative faible conicité comme indiqué ci-dessus) (voir angle Rep Co ).

Ainsi, la forme de l'entrée d'admission du fluide dans les canaux internes de l'unité mobile permet de minimiser la perturbation de pénétration dans la masse fluide environnante de l'unité mobile. La traînée externe aéraulique, hydraulique, ou mixte générée par l'avant de l'unité mobile est minimale et est construite pour tendre vers zéro. Afin de réduire les effets de compression à hautes vitesses générés par ce dit bord d'attaque, en particulier ceux apparaissant au passage dit du « mur du son » ; la section nette de ce dit bord d'attaque pourra être conçue autrement que perpendiculaire à la trajectoire suivie par ladite unité mobile, c'est-à-dire qu'elle pourra être inclinée sur son axe principal longitudinal. Les ondes de pression ainsi générées en cette zone sont, de ce fait, plus diffuses et progressives que celles qui apparaîtraient dans une disposition perpendiculaire. En amélioration complémentaire de ce bord d'attaque, non exclusive de la disposition précitée, une construction de ce bord d'attaque en forme de courbe irrégulière, par exemple vaguement sinusoïdale (ou de forme dite en « zig-zag » dont les angles vifs seraient atténués), permet de rompre la linéarité des zones de pression qu'il génère et contribue à l'atténuation des effets notamment sonores produits, en particulier à Mach 1. Les technologies numériques de fabrication dans des matériaux de haute résistance thermique permet de concevoir des bords d'attaque répondant à ces caractéristiques de conception nouvelle.

Ce dit bord d'attaque est aussi caractérisé pour porter dans sa partie « amont » proche de la section entrante : Rep 3, un jeu de détecteurs -Rep CPA de pression différentielle qui permet, par asservissements internes, ou par contre-réaction automatique de détection d'une différence de pressions entre flux externe et flux admis dans les dits canaux fluidiques internes, d'assurer une dépression permanente dans la veine fluide « entrante » par rapport à la pression du fluide environnant traversé, en agissant sur la puissance instantanée demandée aux dispositifs « ventilo-compresseurs » , elle-même en relation direct avec celle demandées aux dispositifs de motorisation internes. Ce dispositif est essentiel et fondamental au fonctionnement tel que revendiqué des dites unités mobiles car il donne à celles-ci la garantie de pouvoir développer une réelle capacité à fonctionner selon le principe de l'absorption frontale « totale et garantie », de l'intégralité de la veine fluide qui s'oppose à leur déplacement.

Selon un aspect particulier, les dites unités mobiles comprennent un ou plusieurs ensembles propulsifs agissant directement ou indirectement sur la totalité du fluide traversant ledit ou lesdits canaux internes ; lesdits ensembles propulsifs sont positionnés de façon optimale dans le ou lesdits canaux internes , en principe à partir de la fin de la zone de convergence maximale de la / des veines fluides entrantes canalisées, dans la zone centrale des dits conduits fluidiques, et peuvent se terminer au début de la partie divergente constituant la troisième partie des dits conduits fluidiques internes. Cette disposition constructive n'est nullement limitative en ce qui concerne les longueurs relatives opérationnelles des trois segments de base décrits ; les contraintes de vibrations, de dilatations thermiques, de résistance mécanique aux pressions constatées et développées, de sections à prendre en compte pour assurer les débits volumiques nécessaires au développement des forces motrices attendues et toutes les considérations liées à l'exploitation technique et commerciale des dites unités mobiles sont à prendre en compte pour adapter ces segments les uns aux autres en particulier au plan de leurs longueurs respectives.

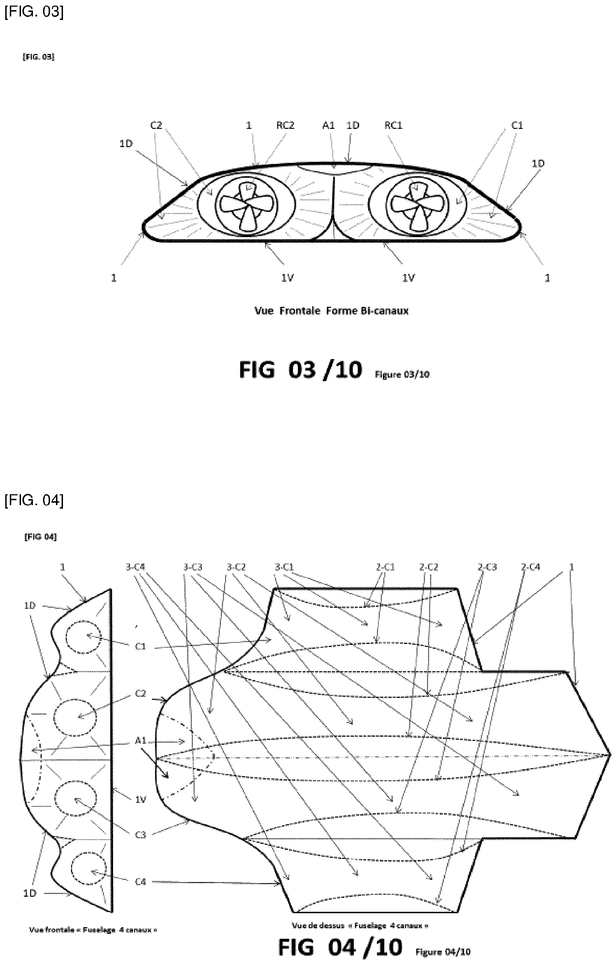

La propulsion d'une unité mobile constituée de plusieurs canaux (voir Figure 04/10) pourra être assurée par plusieurs ensembles propulsifs, un ou plusieurs par canal. Les canaux fluidiques qui ne seraient pas équipés de groupes propulsifs motorisés sont néanmoins conçus pour participer à l'absorption de la totalité de la veine fluide frontale qui s'oppose au déplacement de ladite unité mobile au droit de leurs entrées frontales et pour rendre dépressionnaire toutes les zones considérées comme « frontales » ; les dits conduits fluidiques qui ne seraient pas motorisés au plan thermique, sont équipés, dans ce cas de figure, d'accélérateurs de flux et/ou de ventilateurs-compresseurs « avant » actionnés mécaniquement par une partie de la force motrice développée par les groupes propulsifs principaux équipant les canaux fluides motorisés, ou par une force motrice développée par les groupes propulsifs dont l'énergie serait stockée transitoirement sous une autre forme que mécanique, par exemple « électrique » ou « électrochimique » (ex : batteries-accumulateurs) ou hydraulique , en passant par des générateurs mus par les motorisations principales ( par exemple thermiques et mécaniques), les quels alimenteraient des moteurs (électriques ou hydrauliques) qui actionnent les ventilo-compresseurs des conduits fluidiques dits « secondaires ». Les canaux fluidiques Rep C2 et Rep C3 peuvent être directement (sur le plan thermique) motorisés alors que les canaux Rep C1 et Rep C4 sont équipés d'accélérateurs de flux alimentés sur le plan énergétique par les groupes propulsifs des canaux Rep C2 et Rep C3. Ces dispositions constructives sont pour autant combinées aux asservissements décrits ci-dessus qui assurent la mise en dépression permanente de l'avant de chacune des entrées canalisante des dits canaux fluidiques internes et par globalisation, par la mise en dépression frontale de l'ensemble de la section frontale « avant » des dites unités mobiles.

Selon un autre aspect majeur et essentiel des unités mobiles revendiquées, l'ensemble des volumes, dégagés et disponibles entre ladite enveloppe « fuselage » externe et ledit/lesdits canaux fluidiques internes, vus comme des « fuselages » internes, est construit et structuré comme un « espace utile compartimenté » ( voir figure 02/10) et non 'comme une réserve de gaz constitutive d'une partie de dirigeable'. Cet ensemble de volumes est potentiellement, totalement structuré et optimisé au plan technique pour permettre :
∘ la construction d'une ossature-support rigide de liaison entre les constituants décrits à savoir : enveloppe « fuselage » externe, les enveloppes internes formant les dits canaux fluidiques, le ou les ensembles propulsifs, et
∘ la structuration de la totalité des autres volumes disponibles et non occupés de cet espace (à la restriction près, faite au paragraphe précédent) en compartiments techniques spécifiques nécessaires ou utilisables (liste non limitative) tels que : une cellule de pilotage ou de contrôle de trajectoire, un ou plusieurs compartiments passagers, un ou plusieurs compartiments pour le transport de marchandises, un ou plusieurs compartiments de stockage d'équipements techniques ou un ou plusieurs compartiments de stockage de carburant, voire de comburant, des structures d'accueil et
∘ le déploiement de compléments techniques et/ou d'accessoires, rétractables ou non, tels que :
   ▪ ailes rétractables, trains d'atterrissage, gouvernails, ailerons,
   ▪ dispositifs de pilotage jugés plus ou moins indispensables suivants les qualités d'évolution obtenues pour ces unités mobiles innovantes
   ▪ tuyères de guidage Rep TG1 et Rep TG2 disposées à l'arrière des groupes propulsifs permettant à des flux secondaires mis « en échappements latéraux, ponctuels », contrôlés, le long du fuselage externe, de développer des forces externes latérales maîtrisées qui participent au pilotage des dites unités mobiles (ex : voir Figure 09/10).
∘ L'ensemble de cette structuration fait de ce type d'unités, des mobiles qui ne peuvent « en aucun cas » s'apparenter à des aéronefs légers de type « dirigeables » ou autres, même si la recherche globale du poids minimum soutiendra le développement technique desdites unités.
∘ Lesdites unités mobiles ne sont en aucune manière destinées à faire du positionnement stationnaire dans le milieu fluide environnant, elles sont conçues pour permettre une amélioration des performances techniques combinées, notamment « vitesse », énergétiques et acoustiques des mobiles connus, autres que les dirigeables, adaptés à leur milieu d'évolution qui sont pour l'essentiel l'air et l'eau (ex : avions, bateaux, sous-marins, ...).

Les unités mobiles ainsi constituées sont équipées d'éléments complémentaires de stabilisation et de parallélisation du fluide les traversant, permettant de contrôler et de stabiliser les écoulements fluides à plusieurs niveaux, le long des conduits fluidiques internes.

Ces éléments, totalement internes, peuvent aussi avoir pour rôle de participer au guidage de l'unité mobile en agissant sur la trajectoire des fluides « immédiatement avant » leur sortie ou au moment précis de leur éjection du ou des conduits fluidiques internes, par effet de réaction sur le milieu environnant, créant un effet de flux directionnel maîtrisé "non aligné ' avec l'axe principal de la dite unité mobile, permettant de contrôler la trajectoire que doit suivre l'unité mobile sur un parcours imposé. Ces éléments, de par leur capacité à orienter le flux ou une partie de ce flux sortant du ou des canaux internes, permettent le développement de forces contribuant à la stabilité « avant-arrière » et/ou rotationnelle de l'unité mobile dans son ensemble (effets de tangage ou de roulis), tel un gouvernail de profondeur ; utilisés dans des unités mobiles évoluant en milieu mixte « air-eau » ils peuvent être commandés, pilotés par asservissements pour contrôler l'équilibre de déjaugeage de l'ensemble de l'unité mobile (effet de "foil") afin de maximiser l'efficacité propulsive rapportée à l'ensemble de l'unité mobile ( exemples : Rep P1 et P2 ).

A noter que ces forces directionnelles pilotées agissant sur le flux éjecté en section arrière des dites unités mobiles s'ajoutent vectoriellement aux forces de portance développées par leur enveloppe « fuselage » externe par leurs formes préférentiellement « aplaties » voir « très aplaties » décrites ci-dessus.

### 4. Exposé de modes de réalisation

Une gamme complète d'unités mobiles totalement innovantes peut être développée en construisant ces mobiles sur la base du/ des principes de base développés ci-avant, à savoir :
▪ Des aéronefs de toutes tailles à plusieurs passages (canalisés, centraux ou latéraux) d'air,
   ▪ Avions de tous types (y compris drones et pseudo-planeurs à faible motorisation), de tous gabarits, à motorisations internes de tous types (y compris partiellement électrique), à usages divers, notamment militaires, de commerce, de tourisme
▪ Des bateaux de tous types et de toutes tailles à plusieurs passages d'eau (canalisés, centraux ou latéraux, ou enveloppant une coque de forme prédéfinie), équipés d'un ou plusieurs dispositifs de motorisation, à usages divers, notamment militaires, de commerce, de tourisme, :
   Nota : des bateaux conçus avec un ou plusieurs passages canalisés d'eau existent déjà sur le marché ; cependant leur conception n'intègre pas le principe de l'absorption de « l'intégralité » de la zone frontale « avant » s'opposant à leur avancement, ni le principe du carénage externe permettant la délimitation de ladite section frontale concernée et la continuité, en section quasi constante ou à faible conicité, de ce carénage en forme de coque uniforme externe depuis l'avant jusqu'à l'arrière des dits bateaux. Les passages canalisés exploités sur ces bateaux sont à échappement fluide non-maitrisé, à fortes voir très fortes turbulences, dans le milieu fluide environnant.
▪ Des mobiles sous-marins de tous types, de toutes tailles à plusieurs passages (canalisés, centraux ou latéraux) d'eau, équipés d'un ou plusieurs dispositifs de motorisation et des dispositifs de parallèlisation précités, à usages divers, notamment militaires, de commerce, de tourisme :
   Mais aussi
▪ Des mobiles « non volants » de toutes tailles à plusieurs passages (canalisés, centraux ou latéraux) d'air, dont une partie ou la totalité des forces de poids propre est repris par des mécanismes d'appui au sol (ex : roues, des patins, appuis pneumatiques 'genre hydroglisseurs', appuis magnétiques, ...,) équipés d'un ou plusieurs dispositifs de motorisation, à usages divers, notamment militaires, de commerce, de tourisme assimilables à des Motocyclettes, Vélos motorisés Automobiles, Camions, Autobus, Hydroglisseurs, Trains de voyageurs et/ou de marchandises (sur chemin de fer ou assimilés) quelque soient leurs modes de traction (thermique, électrique, ...) y compris les trains montés sur des dispositifs dits « à sustentation magnétique » ou sur coussins d'air, et y compris ceux, innovants, prévus pour circuler dans des conduits dépressurisés ; ces derniers sont prévus pour circuler dans une veine fluide à faible densité mais n'intègrent pas, pour autant de canaux fluidiques internes motorisés tels que revendiqués, qui permettent d'en améliorer les performances.

Une gamme complète d'unités mobiles peut être développée en construisant celles-ci par adjonction à un type de « mobile connu classiquement » d'une enveloppe externe conforme aux enveloppes « fuselages » externes décrites précédemment; le profil spécifique de l'objet incorporé (mobile connu classiquement), sans avoir à redéfinir nécessairement la forme extérieure de l'objet incorporé, formera avec la « surface intérieure » de l'enveloppe externe rapportée, la structure des dits conduits ou canaux fluidiques internes constitutifs de la nouvelle unité mobile.

Pour rentrer dans le champ des unités mobiles innovantes revendiquées et être performantes de telles unités mobiles, devront, obligatoirement, être équipées de dispositifs spécifiques, accélérateurs de flux (notés Rep AF dans les figures « dessins » proposées) permettant d'obtenir de façon significative une dépression « avant » qui garantisse que la trainée externe latérale et périphérique de ladite unité mobile soit très réduite voir quasi nulle. Ces dispositifs, accélérateurs de flux Rep AF, seront, soit intégrés à l'intérieur de l'ensemble « gaine externe » rapportée, soit développés spécifiquement dans le mobile connu intégré. Ces dispositifs, accélérateurs de flux Rep AF doivent, dans tous les cas, être asservis à une détection de la mise en dépression « avant » de l'entrée de la /des canaux fluidiques internes par l'intégration de capteurs ou de dispositifs à contre réaction automatique sur la puissance demandée aux dits accélérateurs de flux Rep AF. Dans cette configuration les motorisations asservies des accélérateurs de flux sont déconnectées des mécanismes de motorisation qui participent à une mise en déplacement des dits véhicules en s'appuyant par exemple sur des roues.

Selon un mode de réalisation particulier, l'unité mobile comprend un objet mobile classique (par exemple une automobile), un avion (formes extrapolées ), un vélo, un bateau ...etc.) autour duquel est ajouté une pluralité de gaines externes participant à la constitution de conduits fluidiques superposés, qui peuvent être longitudinalement « décalés » dans leur pénétration dans le fluide environnant. Ainsi est constituée une pluralité de canaux de circulation du fluide autour de l'objet, de sorte que le milieu fluide environnant dans lequel l'unité mobile se déplace soit peu, voire très peu, perturbé à l'extérieur de la gaine « enveloppe » la plus externe. Les canaux de circulation du fluide entre l'objet initial « classique connu » intégré et la pluralité de gaines externes formant un ensemble « enveloppe » de section externe sensiblement constante, qui peuvent aussi être de longueurs étagées et décalées différentes, s'adaptent aux profils « avant » et/ou « arrière » de l'objet mobile « classique connu » ainsi adapté pour optimiser ses écoulements fluides périphériques, enveloppant le dit objet mobile classique connu.

Le principe de l'invention peut ainsi être aisément adapté pour être mis en oeuvre sur des objets mobiles de formes connues et/ou évolutives à concevoir, pour en faire des unités mobiles selon les revendications.

Des unités mobiles moins performantes, du type de celles décrites précédemment, par incorporation dans une forme enveloppe externe de section quasi constante ou légèrement conique d'un objet mobile connu classique se rattachent au principe de l'invention à condition que l'adjonction de la dite enveloppe externe canalise au maximum le fluide qui s'oppose frontalement au déplacement de l'unité mobile globalement constituée alors qu'aucun dispositif spécifique ne contribue significativement à la formation d'une zone dépressionnaire « avant ». La position suffisamment décalée vers l'avant de la section d'entrée de l'enveloppe externe rapportée par rapport à l'avant du mobile classique incorporé suffit, en écoulement aéraulique à relative faible vitesse, à mettre en pression puis en accélération les zones fluides frontales, puis latérales ou enveloppantes, globalement intéressées par le déplacement du mobile pour créer les conditions d'un écoulement de type 'Tube de Venturi' à la sortie duquel les énergies cinétiques et potentielles accumulées sont restituées en énergie de décompression et de contre réaction qui contribuent à mieux propulser la dite unité mobile.

Les unités mobiles de ce type, moins performantes, sont aussi innovantes dans la mesure où elles sont conformes aux revendications annexées.

La mise en oeuvre d'une pluralité de portions d'entrée, débouchant chacune dans un canal interne indépendant ou dans un même canal interne principal ou dans un ensemble réduit (en nombre) de canaux, en regroupement de canaux entrants, forme ainsi une entrée de canal interne segmentée (Ex : Figure. 08 - 01 et -02 ). La segmentation de l'entrée du fluide dans l'unité mobile permet d'optimiser la continuité des écoulements du fluide au plus près de l'objet « classique connu » incorporé, situé dans cette structure de gaines « avant » externes décalées et superposées et donc de minimiser les perturbations dans le ou les dits canaux internes. Cette segmentation permet, en outre, d'obtenir une canalisation progressive du fluide dont le fonctionnement est similaire à celui d'une superposition étagée, voire concentrique de tubes de Venturi. Les unités mobiles de ce type, dans la mesure où elles sont conformes aux revendications annexées, sont aussi innovantes.

### Description des figures-dessins

[FIG. 01] Figure« Tunnel classique d'essais aérodynamiques - Principe, ne faisant pas partie de l'objet revendiqué »
[FIG. 02] Figure-dessin « Schéma de principe - Forme monocanal motorisée ; Schéma général du principe d'une unité mobile ne faisant pas partie de l'objet revendiqué / vue en coupe longitudinale »
[FIG. 03] Figure-dessin « Unité mobile bi-canaux / Vue Frontale Forme Bi-canaux - Principe »
[FIG. 04] Figure-dessin « Unité mobile à 4 canaux/ vue frontale et vue de dessus - Principe »
[FIG. 05] Figure-dessin « Unité mobile incorporant un bateau »
[FIG. 06] Figure-dessin « Unité mobile incorporant une automobile (2 schémas) »
[FIG. 07] Figure-dessin « Représentation simplifiée du bord d'attaque frontale - Principe »
[FIG. 08] Figure-dessin « Unité mobile incorporant une automobile avec entrée « canal » étagée et segmentée »
[FIG. 09] Figure-dessin « Unité mobile Bi-canaux de type « aéronef » + accessoires »
[FIG. 10] Figure-dessin « Unité mobile de type « aéronef » intégré (avion) »

### 5. Description détaillée de l'invention

La présente innovation propose des unités mobiles conformes aux revendications annexées, dont la forme globale minimise les trainées « avant » générées par leurs déplacements et les trainées périphériques externes, capte « la quasi-totalité » de la veine qui s'oppose frontalement à leur déplacement, canalise cette veine fluide dans des conduits internes en écoulement optimisé (à effet 'Venturi' par exemple), sous l'action d'un ou plusieurs dispositifs de motorisation internes, et restitue la dite veine fluide captée frontalement dans le milieu environnant sous la forme de flux « arrière » éjectés, accélérés, parallélisés et propulsifs à haut rendement énergétique et à nuisances vibratoires (ex : sonores) réduites.

La présente invention divulguée est relative à des unités mobiles motorisées, ( autres que des dirigeables), sans sacs à gaz contribuant à leur élévation par différence globale de densité, autopropulsées, performantes, totalement structurées et architecturées, entre une forme enveloppe « fuselage » externe rigide et des formes enveloppes « fuselage » internes générales, combinées entre elles pour former des ensembles à « fuselages inversés » captant « l'intégralité » de la veine fluide frontale s'opposant à leur mouvement dans le milieu fluide environnant dans lequel elles se déplacent en générant le minimum de perturbations fluidiques périphériques et restituant un flux éjecté « arrière » de section maximale dont la poussée est optimisée .

Ladite veine fluide frontale captée, conduite dans l'ensemble des formes « fuselage interne » qui se définit en un ou plusieurs canaux internes motorisés, lesquels aspirent et propulsent ladite veine de l'avant jusqu'à l'arrière des dites unités mobiles.

Le principe divulgué par la présente invention consiste à incorporer de façon indissociable
∘ plusieurs formes « fuselage » internes dits « canaux » fluidiques, optimisés,
∘ équipées d'un ou plusieurs dispositifs propulsifs efficaces asservis à des capteurs de pressions différentielles « avant » interne et externe,
∘ à une enveloppe externe formant un « fuselage » de section à faible conicité ou quasi-constante et de traînée externe très réduite, constituant globalement une unité mobile nouvelle revendiquée (« représentation de principe très schématique » de certaines caractéristiques : exemple ne faisant pas partie de l'objet revendiqué présenté en Figure 02/10 )

Lesdites formes « fuselage » internes servent de support à un ou plusieurs canaux fluidiques internes, « motorisés », chacun d'eux par un ou plusieurs dispositifs propulsifs (exemple simplifié et très schématique : Rep M1- Rep M2- Rep M3) tels que :
∘ Sous l'action des dispositifs propulsifs internes, l'avant des dits « fuselages » internes sont mis globalement et constamment en dépression par rapport à la pression constatée dans le fluide environnant traversé par ladite unité mobile,
∘ les écoulements fluides internes impulsés par la/les motorisations internes Rep M1-M2-M3, et le déplacement de ladite unité mobile répondent au principe des écoulements fluides optimisés comparables à ceux constatés en « Tube de Venturi » motorisés,
∘ les écoulements fluides externes, sous influence de la forme « fuselage » externe à faible, voire très faible conicité sont à trainée externe minimale même pour des déplacements allant jusque de hautes, voire très hautes vitesses compte tenu de la section progressivement réduite, de l'avant vers l'arrière, de ces formes externes ce qui minimise la transformation des écoulements laminaires de surface en écoulements turbulents,
∘ Sous l'action des dispositifs propulsifs internes efficaces, asservis en puissance au maintien d'une dépression « avant » frontale contrôlée par des capteurs de dépression ex : Rep CPA, les veines fluides captées à l'avant des dites unités mobiles, sont mises en dépression et vitesse par un dispositif « accélérateur de flux » ou un ensemble « ventilo-compresseur » (exemple simplifié et très schématique Rep RC1, Rep RC2, Rep RC3 en liaison avec le/les dispositifs de motorisation ; elles sont de la sorte d'abord accélérées et compressées pour assurer leur continuité de transfert dans le ou lesdits canaux fluidiques internes en tenant compte de leurs formes d'abord convergentes,
∘ Sous l'action des dispositifs propulsifs internes exemple simplifié et très schématique Rep M1, Rep M2, Rep M3, les veines fluides conduites dans la partie intermédiaire des dits canaux fluidiques internes, contribuant totalement ou partiellement aux réactions de motorisation (par exemple sous forme de comburant, par effet de réaction exothermique), sont propulsées énergiquement (augmentation de l'énergie cinétique et potentielle (ex : de pression)), par effets mécanique et/ou thermique (ex : de combustion d'un carburant ou autres combinés), vers la partie descendante, divergente des dits canaux fluidiques internes,
∘ Les veines fluides ainsi mises en mouvement, développent sur les parois de cette troisième partie des canaux fluidiques, divergente, des forces de pression dont la résultante est une réaction de poussée vers l'avant de l'ensemble de ladite unité mobile
∘ A la sortie des conduits fluidiques, dans la zone terminale de ceux-ci, les veines fluides éjectées dans le milieu environnant à des vitesses et pressions supérieures à celles de ce milieu développent, sur une surface équivalente à 100% de la section « Arrière » de l'enveloppe « fuselage », des forces de contre-réaction sur ce milieu, dont la résultante se traduit par une poussée vers l'avant de l'ensemble de ladite unité mobile.
∘ Les veines fluides transitant dans la partie divergente de dits conduits fluidiques sont stabilisées sur le plan directionnel par des dispositifs internes de parallélisation afin de transformer les énergies fluides de turbulence en énergie propulsive, orientée dans le sens de l'écoulement fluide traversant globalement ladite unité mobile. Ces dispositifs de stabilisation rotationnelle et vibratoire des veines fluides turbulentes contribuent notamment à minimiser l'impact vibratoire et /ou sonore des veines fluides éjectées à l'arrière des dites unités mobiles dans la masse fluide environnante traversée et à maximiser leur efficacité propulsive.
∘ Les veines fluides en voie d'éjection des dits conduits fluidiques sont orientées par des dispositifs tels que des ailettes ou ailerons Rep AX1, Rep AX2 , voir des tuyères spécifiques alimentées par le ou les groupes propulsifs principaux décrits ou des groupes propulsifs spécifiques de fonction spécialisée adaptée au guidage des dites veines fluides sortant des dites unités mobiles, de façon à générer sur l'arrière des dites unités des forces de guidage latérales par contre réaction sur ces éléments de guidage (ailettes ou tuyères ) et des forces de contre-pression latérales sur la masse fluide environnante. Ces forces 'non-axiales' sont développées à la demande par des asservissements en liaison avec le dispositif de pilotage de ladite unité mobile.
∘ Les veines fluides transitant dans la partie divergente de dits conduits fluidiques, en applications de type « aéronefs », sont contributives (partiellement) à la production d'énergie en actionnant des capteurs d'énergie motrice qui peuvent être moteurs (ex : turbines Rep T, ..., alternateurs 'générateur d'électricité') qui sont en liaison
   ▪ avec les dispositifs « ventilo-compresseurs » situés dans la première partie convergente des dits conduits fluidiques internes ,
   ▪ avec des dispositifs « d'accumulation d'énergie » eux-mêmes en liaison avec des « ventilo-compresseurs » situés dans des conduits fluidiques dont la motorisation est autre que thermique, par exemple « à motorisation électrique ».

Les veines fluides captées frontalement sont, ainsi que décrit, transférées intégralement vers l' « arrière » de la seconde partie des canaux fluidiques internes des dites unités mobiles, avec une forte augmentation d'énergies potentielle et cinétique lesquelles et sont libérées dans la troisième partie « arrière » divergente des canaux fluidiques internes pour un retour dans le milieu fluide environnant marqué par un différentiel maîtrisé de pressions , de vitesses et de turbulences sur tous les segments de la section « arrière » finale des canaux internes qui s'ajustent à la section « arrière » du fuselage « externe, produisant de la sorte le développement de « forces parallélisées de poussée sur la totalité de la section arrière », qui assurent la mobilité de l'unité constituée avec une efficacité augmentée.

Les dispositifs de motorisation décrits sont connus dans leur principe de fonctionnement ; cependant ils sont adaptés par des dispositions constructives qui améliorent leur rendement global et permettent leur intégration dans une structure de canaux fluidiques allant de la section « avant » jusque la section « arrière » des dites unités mobiles

Le second principe divulgué est relative à la forme aérodynamique ou hydraulique externe particulière des unités mobiles décrites.

Le principe de cette forme « fuselage » externe consiste en un ensemble des profils se définissant théoriquement comme suit :
▪ Section nettes « avant » : une courbe plane, fermée, quelconque ou une association de courbes planes fermées tangentes ou sécantes dont les segments intérieurs en recouvrement peuvent être supprimés de façon à ne conserver que leur ensemble périmétrique le plus externe ;
▪ Section nettes « arrière » ; une courbe homothétique de la section « avant » réduite de quelque pourcent, parallèle à celle-ci, constituant avec la section nette décrite ci-dessus un support au développement de la surface externe (« fuselage externe ») décrite ci-dessous,
▪ Surface externe : celle qui se déduit d'un ensemble continu de génératrices qui « s'appuient » sur les profils des sections nettes « avant » et « arrière » décrites ci-dessus, perpendiculaires aux plans des dites sections, formant un cylindre continu légèrement conique de puis l'avant jusqu'à l'arrière, de section variable telle que décrite ci-dessus, et de longueur limitée et adaptée à l'application technique visée dont les sections utiles d'entrée et de sortie ne sont pas nécessairement planes, ni perpendiculaires aux génératrices formant l'enveloppe externe décrite ci-dessus.

Les dites sections nommées « amont » et « aval » pour un même unité mobile ne sont pas nécessairement identiques, ni parallèles, ni homothétiques, ni homogènes : une section 'amont' « droite » pouvant par exemple être couplée à une section 'aval' « oblique » ou « quelconque » ; la définition des profils « fuselage » externes et des sections « amont » et « aval »des dits unités mobiles sont libres et non interdépendantes et n'ont de contraintes qu'en ce qui concerne la relative constance de leur forme externe, pour former un cylindre à faible conicité, laquelle contribue à minimiser les effets de turbulence générés à haute vitesse par la déstructuration des écoulements laminaires au contact des surfaces externes des dites unités mobiles.

Les enveloppes « fuselage » des unités mobiles multicanaux, dont les longueurs sont différentes, sont vues comme une association d'enveloppes « fuselages », chacune conforme à la définition faite ci-dessus, mais de longueurs adaptées aux canaux fluides qu'elles intègrent (Exemple schématique : ([Figure . 04])

Ces formes aérodynamiques ou hydrodynamiques définissent les profils externes des dites unités mobiles. Elles sont telles que lesdites unités mobiles constituées, déplacées dans un milieu fluide (gazeux ou liquide) lui-même statique ou en mouvement, les turbulences générées par le contact des dites formes externes avec le fluide environnant soient « macroscopiquement minimales ».

Les effets de pression « externe avant » développés par le déplacement desdites unités sont quasi nuis sous l'effet de dépression « avant » généré par le ou les dispositifs propulsifs internes décrits ci-dessus et dépendent de la qualité 'aérodynamique' ou 'hydrodynamique' du bord d'attaque de la section 'avant' des dites unités mobiles (voir exemple non limitatif [Figure . 07]). Ces bords d'attaque seront donc profilés en externe aussi finement que possible avec un angle de pénétration dans le fluide environnant de faible valeur qui respecte la faible conicité de la forme extérieure décrite, et en interne, seront constitués en amorce progressive des formes intérieures des dits canaux internes décrites. L'angle d'attaque est représenté en Rep « A- 1/2» entre l'enveloppe extérieure à faible conicité « Rep 1 » et l'amorce de l'enveloppe intérieure, d'un canal interne, Rep « 2-A » segment de jonction entre ces enveloppes.

En développement d'applications aérauliques (aéronautique) et hydrauliques, afin d'augmenter les caractéristiques de manoeuvrabilité des dites unités mobiles, les formes externes des dites enveloppes « fuselage » de section quasi-constante ou de faible conicité seront « aplaties », voir « très aplaties », allant jusqu'à présenter un face ventrale totalement plane, de façon à ce qu'elles développent dans le milieu fluide environnant traversé des forces de « portance » propres qui s'ajoutent vectoriellement aux forces de poussée « arrière »du/des flux traversant lorsque celui-ci est orienté à la demande, « piloté », pour suivre une trajectoire imposée.

Dans le domaine aéraulique (aéronautique), à faibles vitesses d'évolution dans le milieu fluide traversé, les formes « fuselage » revendiquées, même aplaties, ne pourraient développer les forces de portance suffisantes pour contrecarrer les forces de pesanteur (ce qui conduirait à la chute des dites unités mobiles). Pour vaincre cette difficulté technique, lesdites unités mobiles revendiquées peuvent être construites
▪ Soit avec l'incorporation d'ailes pour une portance augmentée qui puissent être escamotables
▪ Soit avec l'incorporation à la dite face « ventrale » des dites unités de caissons plats, (voir très plats ou plans) pressurisés et alimentés temporairement par déviation d'une partie des flux internes, captés après motorisation, à moyenne ou haute pression, munis d'une multitude de points d'échappement fluide agissant comme des micro-tuyères dont l'action globale se traduit par une poussée surfacique verticale qui permet de compenser le manque de portance constaté à faibles vitesses.

Ces unités mobiles telles que décrites ci-dessus, au-delà de la zone technique et/ ou propulsive décrite, en aval, en suivant le cours descendant du fluide le traversant, pourront recevoir des équipements de récupération et/ou de captation d'énergie actionnés par le flux du fluide propulsé dans la zone terminale du dit tunnel interne, plus spécifiquement en arrière de la zone équipée de moyens propulsifs dans laquelle le fluide propulsé est au maximum de vitesse, de pression et de turbulence (voir exemples non limitatifs Rep T. En aéronautique, ces équipements peuvent agir en compression du fluide 'entrant' en amont dans un ou plusieurs réacteurs de propulsion placés dans le ou les canaux fluidiques (voir exemple non limitatif Rep AM + Rep-RC1 +Rep RC2+ Rep RC3).

La particularité pour les unités mobiles décrites consiste, sur le plan de la motorisation, à incorporer le/les dispositifs de propulsion dans le corps même du ou des canaux internes décrits, « en les allongeant sur une partie significative de la longueur de ces dits canaux », ou à les intégrer aux volumes disponibles le long de ces dits canaux, en y exposant que les éléments techniques directement nécessaires à la propulsion. Ces dispositions constructives permettent la séparation des fonctions « ventilo- compression 'avant' », « chambre de combustion », « diffusion-décompression primaire arrière » associée à la motorisation de la fonction « ventilo-compression 'avant', et « diffusion-décompression » finale, elle-même vectorisée par les dispositifs de parallélisation décrits et revendiqués. La longueur relative des canaux fluidiques internes, sensiblement égale à la longueur totale des dites unités mobiles, est telle qu'elle permet la « déstructuration technique longitudinale » des réacteurs connus pour les adapter aux caractéristiques innovantes des dites unités mobiles. Cette déstructuration longitudinale permet entre autres avantages techniques d'améliorer la « qualité de la combustion » des comburants utilisés :
▪ en préparant le carburant utilisé par une mise en très haute pression associée à une nette élévation de température (sur-pressurisation), telles que l'injection de ce carburant se fasse uniquement en phase gazeuse, sans microgouttelette liquide, de telle façon que la combustion se fasse sans générer de particules fines de pollution,
▪ en multipliant et en allongeant les chambres de combustion, voire en les distribuant sur des profils, par exemple en hélice, tels que les ondes de pression développées par la combustion soient progressives, non-planes, se développant dans une pluralité de chambres de combustion primaire dans lesquelles une partie du fluide « comburant » est admis après avoir été préchauffé afin de réduire les risques de re condensation du carburant mis en phase gazeuse , puis dans des chambres de post-combustion alimentées du reste du plein débit fourni par les canaux fluidiques principaux,
▪ en maîtrisant les turbulences de combustion ainsi produites en les réduisant et en diminuant les effets sonores générés (combustion moins rapide, moins explosive), lesquels effets sont adoucis par le fait qu'ils se développent dans une colonne fluidique bien plus longue (effet de type 'rampes à gaz' ou du type 'chalumeaux'). La disposition constructive multicanaux revendiquée permet d'envelopper le/les canaux principaux motorisés par des sous-canaux (voir exemple non limitatif Rep GTS) qui participent à la maitrise des effets ci-dessus mentionnés (thermiques et sonores) : (voir exemple non limitatif Rep 30 ) et à l'efficacité propulsive recherchée, comme dans un réacteur connu dit « à double flux », en particulier dans les zones longitudinales qui jouxtent et prolongent la/les zones de motorisation concernées par les réactions internes de combustion.

La déstructuration technique longitudinale des réacteurs connus exploités, revendiquée, est rendue possible, à titre d'exemple, par une architecture nouvelle de l'arbre principal traversant les dits réacteurs, lequel, au lieu d'être monobloc, peut être multi-composants, à rupture axiale (ex : avec joints élastiques, ...), ou physiquement dématérialisé en utilisant des technologies à base d'hydraulique ou d'électricité (ex : arbre électrique, ...).

Les unités mobiles telles que décrites ci-dessus, au-delà de la/des zones propulsives décrites (partie intermédiaire), pourront recevoir, en « sortie » de ladite zone intermédiaire du/des dits canaux internes, des équipements « diffuseurs » de flux et de « stabilisation - parallélisation » des turbulences dans le flux sortant comme décrits ci-dessous, avant sa mise en échappement dans la masse globale du fluide environnant.

Les équipements diffuseurs sont principalement du type « Turbine à gaz », connus dans les réacteurs 'aéronautiques 'en exploitation et/ou dans les centrales de production d'électricité Au deuxième degré, ces 'turbines', en captant l'énergie potentielle du flux qui les traverse, en abaissant les températures, vitesses et pressions de ce fluide, le libèrent dans un état de turbulences non maîtrisées, d'où la nécessité du dispositif de 'parallèlisation' descendant suivant le sens d'écoulement fluide, décrit ci-dessous.

Les dispositifs de parallélisation sont matérialisés en plusieurs niveaux en suivant le sens des écoulements fluides :
a dès l'entrée dans la zone terminale divergente des dits conduits fluidiques, à la sortie immédiate de la zone de motorisation (portion intermédiaire), ou généralement immédiatement après le dispositif « Turbine » décrit ci-dessus, par une structure « serrée », occupant l'intégralité du passage de la veine fluide en transit, construite pour résister aux turbulences du flux (en sortie des dispositifs de motorisation ou de « Turbine »), aux gradients de température du fluide correspondant y compris dans les phases transitoires de démarrage et ne présentant face au flux propulsé qu'une section nette « matière » minimale ; un exemple de construction de ce type de dispositif de parallélisation peut s'appuyer sur des structures de type « nid d'abeilles » en Carbone ou en Fibres de Carbone.,
.b un ensemble de jeux d'ailettes, notamment deux jeux, montés perpendiculairement l'un à l'autre, soit fixes, soit pilotés, asservis aux fonctions de guidage des dites unités mobiles, en orientant le/les flux en sortie des dits canaux, immédiatement avant leur éjection dans l'espace fluide environnant, et « non » à l'extérieur et après la terminaison de l'enveloppe « fuselage » externe.
.c à un niveau intermédiaire entre les deux ensembles d'ailettes décrits ci-dessus, ou en troisième niveau immédiatement avant l'éjection de la / des veines fluides dans le fluide environnant, un jeu de tuyères alimentées soit par les dispositifs principaux de motorisation, soit par des motorisations secondaires spécifiques. Ces tuyères sont conçues pour être orientables et pilotées en direction et en débit de façon à influencer significativement la direction d'éjection du flux principal de chaque canal fluide.

Le résultat final de l'action produite par l'ensemble de ces dispositifs « Turbine + Parallélisateurs » sur le flux traversant le /les dits canaux internes est de restituer ce flux avec une efficacité maximale au moment de sa sortie « arrière » au point de sa jonction avec le flux 'externe', environnant, enveloppant la dite unité mobile. Cette efficacité est recherchée et développée sur les points suivants : atténuation et parallèlisation des « turbulences », réduction des « températures », « vitesses » et « pressions » du flux les traversant.

Ainsi les dites unités mobiles sont propulsées à partir d'une surface égale à la totalité de la zone « arrière » contenue dans le périmètre de l'enveloppe « fuselage » externe, et il est évident, pour un homme de l'art averti, de comprendre que la force propulsive nécessaire pour maintenir une vitesse « imposée, pilotée », s'obtient pour un flux de sortie dont
▪ la section propulsive « efficace » est maximale, égale à la section arrière de l'enveloppe externe
▪ la vitesse d'éjection est maîtrisée, contrôlée, supérieure à la vitesse d'entrée frontale, mais relativement proche de la vitesse imposée par pilotage à l'ensemble de la dite unité mobile,
▪ La pression est supérieure mais relativement proche de la pression régnant dans le fluide environnant, (évitement d'un effet de détonation et donc réduction des nuisances sonores),
▪ La température est aussi basse que possible, compte tenu des process mis en oeuvre, de façon que la perte d'énergie thermique « éjectée » soit minimale par, notamment, l'optimisation de l'effet double flux décrit.

Ces conditions d'exploitation de l'ensemble du dispositif propulsif proposé, exposées ci-dessus, permettent de comprendre son efficacité alors qu'il est incorporé dans une unité mobile dont la traînée aéraulique (aérodynamique) externe est minimale du fait de son enveloppe « fuselage » externe de faible conicité sur tout sa longueur (ou de section quasi-constante), en rappelant que la zone dépressionnaire frontale 'avant' est permanente et générée et gérée par asservissement de l'ensemble du dispositif innovant divulgué.

Des dispositifs télécommandés complémentaires d'orientation et de stabilisation de ce flux sortant sont mis à contribution pour maîtriser les opérations de stabilisation et de gouverne des dites unités dans leur conduite pour suivre une trajectoire de parcours imposé. Ces dispositifs ( voir ex sur Figure 09/10) pourront être constitués de tunnels auxiliaires formant « gaines secondaires d'écoulement fluide sortant directement des zones de motorisation sans être freinées », connectées à la demande par des mécanismes internes télécommandés aux tunnels principaux d'écoulement fluide, dont les sorties « fluide » orientables débouchent à des points spécifiques de l'enveloppe fuselage externe cylindrique à faible conicité, de façon à générer des forces latérales maîtrisées agissant en orientation de trajectoire ou de giration des dites unités mobiles. (Voir détails de construction non limitative possible Rep TG1 et /ou Rep TG2). Accessoirement lesdites unités mobiles, afin qu'elles soient d'une manoeuvrabilité augmentée, en modification de leur section externe globalement légèrement conique, pourront être équipées de dispositifs nécessaires ou optionnels, apparaissant temporairement ou en permanence, en saillie externe de ladite enveloppe externe, notamment :
∘ En applications aérauliques
   ▪ ailes porteuses externes fixes ou rétractables qui augmentent la portance propre des dites unités dans leurs parcours à faibles et/ou moyennes vitesses,
   ▪ caissons porteurs incorporés à la dite face « ventrale » des dites unités de caissons plats, (voir très plats ou plans) pressurisés et alimentés temporairement développant une poussée surfacique verticale qui permet de compenser le manque de portance constaté à faibles vitesses.
   ▪ ailes ou ailerons d'orientation de type « gouvernail » de contrôle de trajectoire
   ▪ ailerons de contrôle des effets de giration de tous ordres ;
   ▪ mini-organes propulsifs spécifiques actionnés par impulsion ou de manière prolongée et contrôlée, à effet d'orientation et de guidage ou effet de contrôle des mouvements de giration
   ▪ organes rétractables nécessaires aux opérations de décollage ou d'atterrissage (ex : trains de roues, ...) ;
   ▪ capteurs de navigation ou des dispositifs de repérage associés à des radars ou des dispositifs de prises d'images ou de vidéo-surveillance,
   ▪ dispositifs de dégivrage lorsqu'ils sont nécessaires.
   ▪ Liste non limitative, développable par l'homme de l'art
∘ En applications hydrauliques et en milieu mixte (ex : air-eau) :
   ▪ La plupart des équipements et accessoires précités applicables dans le domaine de l'aéraulique peuvent être transposés en milieu hydraulique en tenant compte des spécificités de ces milieux à fortes viscosité et densité, incompressibles, dans lesquels les composantes,

- « flottabilité » notamment, liée à la densité,
- « viscosité » liée aux vitesses mises en oeuvre risque de générer des effets de cavitation,
doivent être prises en compte à tous les niveaux de conception.

Ces accessoires montés fixes ou escamotables viendront augmenter définitivement ou temporairement la trainée fluidique de l'enveloppe externe desdites unités mobiles sans pour autant réduire leur caractère innovant de base, par associations non revendiquées.

Lesdites unités mobiles décrites, sans perdre leur caractère innovant de base, en respectant la faible conicité de l'enveloppe « fuselage » externe et les formes des conduits fluidiques internes décrits :
- pourront être équipées, en interne de tous les matériels de navigation nécessaires connus adaptés aux domaines d'applications possibles (aéronautique, marine profonde et de surface)
   ▪ seront construits, dans tous les volumes aménagés et/ou aménageables disponibles, entre le fuselage « externe » et les formes « canaux fluidiques » internes, en espaces techniques, qui ne sont en aucune façon assimilables à des sacs à gaz, qui auraient pour fonction de recevoir :
      ▪ l'ensemble des éléments de structuration mécanique des dites unités mobiles :
         Ossatures principales, Supports mécaniques des ensembles et composants internes ( : Ces ossatures et supports intègrent tous les composants issus de toutes les technologies modernes adaptées à l'usage fait des dites unités mobiles,
      ▪ l'ensemble des cellules techniques nécessaires au pilotage et au développement de toutes les fonctions de motorisation, de guidage et commerciales prévues dès leur conception. Les volumes techniques associés, développés pour architecturer lesdites unités mobiles seront
      ▪ soit collés, adossés à la structure de l'enveloppe externe définie et composés d'un ou plusieurs sous-volumes développés, conçus néanmoins pour intégrer les structures dédiées à la constitution des canaux internes décrits
      ▪ soit constitués d'un seul ou plusieurs volumes placés au centre du tunnel principal en laissant passer, régulièrement réparti ou non, l'ensemble de l'écoulement fluide.

Les volumes et formes développées pour constituer les canaux fluidiques internes sont optimisés de telle sorte que leurs pertes de charge (traînée) « internes » hydrauliques ou aérauliques ou mixtes propres soient minimales

En présentation schématique, sans que la description qui suit du croquis simplifié présenté en Figure .02, à simple titre d'exemple d'une unité mobile « très schématique » décrite se déplaçant dans le sens indiqué par la flèche repérée « SD » (sens du déplacement) , ne puisse être considérée comme une version des unités mobiles revendiquées, évolue, dans le milieu d'environnement noté Rep FE, entre le flux entrant repéré FE1 et le flux de sortie repéré FS, en repères :
- 1 un exemple simplifié très schématique de forme « fuselage » extérieure Rep 1 ,à section légèrement conique,
- 2 un exemple de forme intérieure schématique, évolutive, en forme de conduit fluidique « unique » (quatre points Rep 2),
- 3 un exemple de section d'entrée Rep 3, de la veine fluide captée par l'avant du dit mobile. Cette section, à titre d'exemple, est rudimentairement représentée en de forme « ovale », en section transversale (non représentée) ;
- 4 un exemple de section de sortie Rep 4, de la veine fluide éjectée de l'arrière du dit mobile ;
- A1 à l'avant du dit mobile, sans empreinte sur le profil « fuselage » extérieur légèrement conique, une représentation très schématique de la cellule de pilotage ;
- A2 une représentation très schématique du compartiment servant de cellule de contrôle de la trajectoire de vol ;
- B1- B2 - B3 - B4 - une représentation très schématique de compartiments de 'assagers';
- C1 - C2 - C3 une représentation très schématique de compartiments 'Fret';
- D2 une représentation très schématique d'un compartiment technique
- E1 - E2 une représentation très schématique de compartiments d'équipements techniques de stockage de fluides
- F1 - F2- une représentation très schématique de compartiments de stockage cloisonné de carburant ;
- G1 - G2- une représentation très schématique de compartiments de commande d'actionneurs permettant la manoeuvre des équipements décrits en repère « P1 - P2 » ;
- P1 - une représentation très schématique d'un ensemble « guides-diffuseurs » de flux P2- une représentation très schématique d'un jeu d'éléments de Volets mobiles, pivotant autour d'axes
- M1-M2-M3 une représentation très schématique de l'ensemble propulsif du mobile présenté en position centrale
- RC1-RC2-RC3 L'ensemble propulsif proposé permet de capter la totalité de la veine fluide entrant par l'avant du mobile et, pour ce faire, peut être doté d'un équipement de « ventilo-compression » 'avant', éventuellement étagé ;
- GTS Dans le cas ou une partie seulement de la veine fluide entrant dans le mobile est conduite vers le dispositif de motorisation, une veine fluide périmétrique (Rep « GFA » ou « Rep 30 ») conduite par un sous-canal (Rep « GTS ») de guidage de l'air admis depuis l'avant du mobile, sert d'écran thermique et sonore aux vibrations aérauliques générées par le dispositif de motorisation et participe au développement d'un dispositif dit « double flux » et de post combustion ;
- T une représentation très schématique d'une Turbine (capteur-moteur), qui actionne directement ou indirectement tous les équipements internes de l'unité mobile constituée par l'intermédiaire d'un générateur électrique (Rep « GE ») ou hydraulique, accouplé à ladite Turbine.

Le positionnement relatif des composants, dispositifs et cellules de l'ensemble des éléments précités n'est en aucun cas limitatif, ni restrictif et n'altère en rien les fonctionnalités de base recherchées, revendiquées dans le cadre de leur adaptation aux dits canaux internes et à l'ensemble des unités mobiles constituées.

En Figure . 03, est représentée la vue « avant » d'une unité mobile avec une section apparente de forme « Ovale aplatie » de forme dérivée de l'association d'un « ovale » et d'une surface quasi-plane, marquée sur la face ventrale de ladite unité.

Ce type d'association permet d'obtenir des formes « fuselages » externes qui, en aéraulique notamment, non seulement à relatives basses vitesses, développent sur la face ventrale des dites unités mobiles des forces de pression qui s'ajoutent aux forces de dépression dorsale ;

En complément de la représentation schématique faite par les Figure . 02 et Figure . 03, la Figure . 04 présente, à titre d'exemple très schématique, non limitatif, une unité mobile comportant plusieurs canaux (quatre) :
▪ deux canaux latéraux Rep C1 et Rep C4 d'admission de la partie de veine fluide frontale se présentant face à ces canaux, chacun de ces canaux étant équipé d'un dispositif de motorisation propulsive à base de combustion interne
▪ deux canaux centraux Rep C2 et Rep C3 d'admission de la partie de veine fluide frontale se présentant face à ces canaux, équipés de tous les dispositifs tels que décrits relatifs au croquis-Figure .02, y compris les dispositifs notés Rep RC1, Rep RC2, Rep RC3, actionnés par exemple des moteurs électriques, sans dispositif de motorisation propulsive thermique tels que notés Rep M1- Rep M2- RepM3.

Les sections nettes « avant » des différentes 'entrées' des canaux constitués ne sont pas nécessairement dans le même plan frontal et peuvent être décalées comme représenté, à titre d'exemple non limitatif, dans la Figure . 04; les longueurs relatives des différentes éléments constitutifs de l'enveloppe extérieure Rep 1 ne sont pas identiques et sont adaptées aux longueurs 'utiles' des canaux fluidiques englobés (cette représentation n'est nullement restrictive, ni limitative).

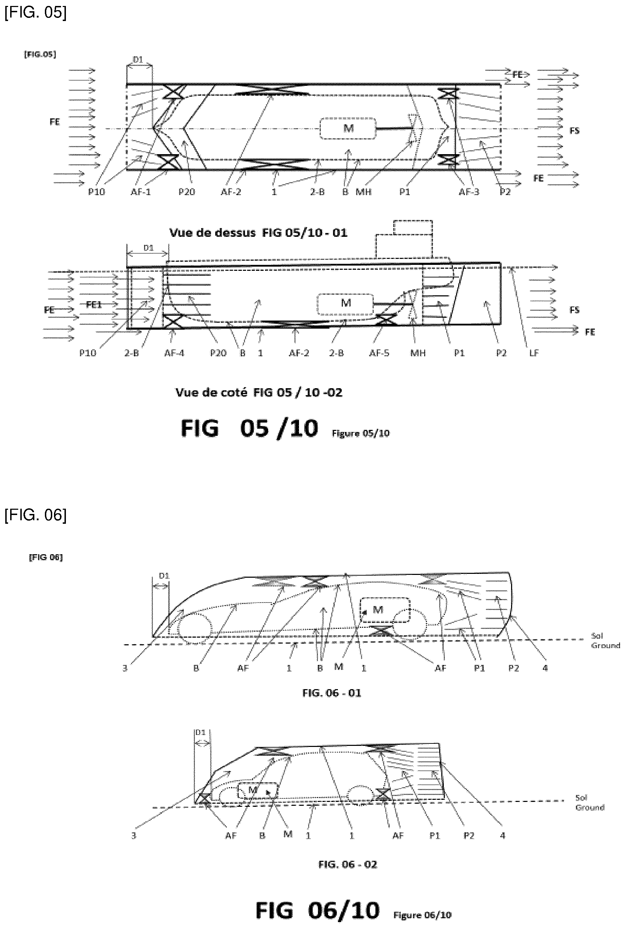

A titre d'exemple d'applications :
▪ pour les catégories d' « unités mobiles connues » évoluant dans un milieu mixte « hydraulique et aéraulique » tels que les navires, bateaux de toutes sortes y compris les voiliers mono ou multicoques, jet-skis, la présente innovation considérée consiste à ajouter aux coques connues de ces mobiles une coque complémentaire, constituant l'enveloppe externe décrite, de « section externe à faible conicité », depuis l'avant du mobile jusqu'à l'arrière de celui-ci, sans que ces points dits « avant » ou « arrière », des dites unités mobiles connues, soient pris strictement en référence (voir en Figure . 05/10 - 01 et Figure . 05/10 -02 le Rep D1 et en Figure 10/10 le Rep D). L'espace dégagé entre l'intérieur de cette enveloppe externe et l'extérieur de la coque conventionnelle d'un mobile connu, matérialise le tunnel externe à celui-ci, canalise les écoulements hydrauliques et aérauliques concernés par l'avancement propulsif du dit mobile et évite les dispersions énergétiques de l'effet de traînée dans le milieu environnant (ex : les vagues qui se forment à partir de l'étrave d'un bateau).
▪ Afin d'assurer une convergence du flux entrant dans ledit tunnel, lequel peut se subdiviser en une pluralité de canaux indépendants et/ou interconnectés, il est nécessaire de générer une dépression « avant » significative dans ladite veine fluide « entrante » en utilisant des dispositifs Rep AF , accélérateurs de flux, comme figurant sur les dessins croquis de principe joints (ex- Figure 05/10, Figure .06/10 et Figure . 08/10). Ces dispositifs Rep AF, de mise en dépression « avant » de la veine fluide frontale, peuvent être asservis à la mesure permanente du différentiel de pression entretenu entre cette zone fluide « entrante » et le milieu fluide environnant extérieur traversé (voir capteurs Rep CPA sur Figure . 07/10). Ces dispositifs Rep AF peuvent aussi être adaptés pour assurer une dépression permanente et régulière le long des parties dites intermédiaires des dits canaux fluides et permettre l'amenée optimisée, en pression augmentée de la totalité du flux fluide conduit, lui-même pouvant être subdivisé, jusqu'à l'entrée de la troisième partie divergente des dits conduits fluidiques. L'entrée de cette troisième partie peut être équipée d'un ou plusieurs dispositifs propulsifs classiques, (ex : hélice « turbine » de bateau ; voir Rep MH sur :Figure . 05/10 -01 et 02 ), et alimentée comme indiqué ci-dessus par un ou plusieurs canaux ou sous canaux fluidiques. Dans le sens descendant du flux, cette troisième partie du/des conduits fluidiques est munie de dispositifs de parallélisation et diffuseurs de flux ( voir ex : Rep P1 et P2 sur Figure . 05/10 01 et-02 , sur Figure .08/10 ) qui permettent l'harmonisation du/des gradients de pressions et vitesses du flux, la réduction des turbulences non axiales qui y apparaissent ; ainsi, se développent contre les parois divergentes de cette troisième partie canalisante des forces de poussée « arrière » qui s'ajoutent aux forces de contre réaction de l'ensemble de la veine fluide éjectée dans le milieu fluide environnant autour et à l'arrière de ladite unité mobile dans le prolongement de sa trajectoire. La surface intéressée par ces forces de poussée et de contre-réaction est celle de la section nette d'éjection arrière de la totalité de la veine fluide qui est elle-même équivalente à celle de la section d'admission frontale, diminuée de l'effet de faible conicité ( voir Rep Co) de l'enveloppe « fuselage » externe.

Pour ce type d'unités mobiles évoluant en milieu mixte dont la surface séparative entre les deux fluides n'est pas stabilisée (le cas des milieux marins principalement, mais aussi fluviaux), la présente innovation décrit aussi l'adjonction aux dispositions constructives déjà décrites, d'éléments de structures de stabilisation et de parallélisation des écoulements fluides à l'intérieur du tunnel principal créé entre la coque principale conventionnelle connue de ces mobiles et la coque externe à section constante ou à faible conicité divulguée. Ces structures internes complémentaires peuvent être segmentées et reproduites à plusieurs emplacements le long du tunnel d'écoulement créé le long du mobile et notamment à l'avant et à l'arrière des dites unités (Voir Rep P10, Rep P20 et Rep P1, Rep P2); ces représentations ne sont pas limitatives.

Ces structures de stabilisation et de parallélisation des écoulements fluides décrites, dont l'orientation générale par rapport à celle des fluides externes à l'unité mobile peut être infléchie par des actionneurs pilotés, ont pour rôle complémentaire de participer au guidage du mobile en agissant principalement sur la trajectoire des fluides éjectés à la sortie immédiate du/des tunnels constitués, créant un effet de gouvernail directionnel par rapport au plan de la surface sur laquelle évolue le mobile. Les structures « arrière » divulguées, par leur capacité à orienter le flux sortant du tunnel constitué, peuvent aussi permettre le développement de forces contribuant à la stabilité 'avant-arrière' du mobile dans son ensemble (effet de tangage), tel un gouvernail de profondeur qui permet de contrôler l'équilibre de « déjaugeage » de l'ensemble de l'unité mobile constituée

Ces dispositifs de parallèlisation peuvent être perfectionnés par exemple par un jeu de tuyères orientables, pilotées et/ou asservies et alimentées soit par les dispositifs principaux de motorisation, soit par des motorisations secondaires spécifiques.

Les dispositions constructives de la structure 'arrière' de parallélisation des flux à la sortie du ou des tunnels internes du mobile constitué sur la base de la disposition constructive divulguée, peuvent aussi s'appliquer à des structures de parallélisation « avant », en dispositif d'amélioration de l'efficacité de guidage ou de pilotage de l'ensemble de l'unité mobile

Ces dispositifs de parallélisation et de guidage de flux, agissant comme des déflecteurs, ne sont en aucun cas assimilables à des cônes de guidage tels que décrits et revendiqués dans le brevet US0256459/2013, lesquels sont aussi décrits comme étant des sacs à gaz, certes munis d'éléments de guidage, mais obstruent grandement le passage du flux frontal s'opposant aux mouvements de changement de direction de l'appareil « dirigeable » revendiqué par ce brevet US.

Ces dispositifs de parallélisation des flux en interne ou en éjection « arrière » permettent de
▪ maximiser l'efficacité des effets de réaction de sortie des flux émis par les organes propulsifs en réduisant notablement les effets de turbulences internes et de
▪ diminuer la trainée globale arrière des dits mobiles en générant dans les zones de sortie un flux dont le gradient des « vitesses » soit optimisé afin de et réduire les ondes de pression génératrices des turbulences et ondes sonores et/ ou thermiques à l'« arrière » et d'harmoniser les ondes de pression perpendiculaires au sens du déplacement des unités mobiles décrites.
▪ maximiser le rendement propulsif des dites unités mobiles et de réduire les traces turbulentes, sonores et/ ou thermiques des dits mobiles décrits.

La section 'avant' opérationnelle de l'enveloppe cylindrique externe constituée autour du mobile à adapter pourra être décalée soit vers l'avant soit vers l'arrière de la « pointe extrême avant » du mobile connu à adapter et/ou incorporer (voir Rep D1), afin d'optimiser la captation des ondes de pression « avant » développées par celui-ci pour réduire la « traînée externe » développée par l'ensemble constitué, dès l'extrémité « avant » de l'enveloppe « fuselage » externe, et la faire tendre vers zéro. Cette structure, correctement dimensionnée et positionnée, a pour rôle de canaliser la totalité de la masse fluide s'opposant au déplacement de ladite unité mobile dans le milieu fluide environnant ; (Voir ce décalage « avant » Rep D1 ).

Toutes les unités mobiles entrant dans le cadre des revendications, dont la forme interne de section variable, constitutive du ou des canaux les traversant, serait adaptée au point de faire ressortir une ou plusieurs parties proéminentes, saillantes par l'avant du dit mobile, Rep B, connu intégré, au-delà de la section nette d'entrée telle que décrite, sans perturber notablement le flux principal « entrant » , capté par la section nette « Avant » de l'enveloppe « fuselage » externe, sont des adaptations admissibles ( voir Rep D). Dans le cas représenté en Figure . 10, la pointe « avant », Rep PAV, proéminente de l'objet mobile incorporé (ici un avion), pour être acceptable et conforme aux objectifs d'efficacité aérodynamique visés, suppose que le mobile considéré est prévu pour ne générer que des ondes de pressions contenues dans un cône allant de l'extrémité de cette pointe jusqu'aux entrées frontales Rep3 des conduits fluidiques Rep 2 ( voir Figure 10/10). Dans ce cas représenté, la longueur Rep D, telle que figurée en amont de l'entrée Rep 3, pointe « avant » proéminente, les vitesses maximales de déplacement supposées du mobile seraient nécessairement « subsoniques ».

Pour une configuration telle que la longueur Rep D soit nulle ou négative (pointe « avant », en retrait, en deçà de la section Rep 3), les vitesses maximales de déplacement supposées du mobile peuvent être supersoniques. L'efficacité aérodynamique supposée d'une telle construction ne sera maîtrisée que si les capteurs de mesure Rep CPA de la dépression frontale au périmètre « avant » (bord d'attaque) de l'enveloppe fuselage (voir Figure . 07/10 ) donne une information de réelle « dépression » différentielle frontale entre les flux admis dans les tunnels/ canaux internes et le flux externe environnant traversé. L'asservissement de la motorisation interne de propulsion servira à limiter la vitesse maximale « économique » de ladite unité mobile constituée.

Les dispositifs de convergence des flux avant « entrant » et de parallélisation des flux arrière- « sortant » sont particulièrement importants afin de permettre une conception efficace, compacte et innovante de l'ensemble du dispositif « tunnel » ajouté aux formes déjà connues de mobiles tels que les automobiles.

Voir à titre d'exemples non limitatifs, pour les automobiles, la Figure. 06/10 - 01 et - 02 . annotées avec les mêmes repères que sur la Figure .02, le repère Rep2 formant paroi du canal interne est remplacé en partie par le profil extérieur du véhicule automobile Rep B mis en canal aérodynamique de section extérieure de faible conicité voir quasi-constante, Rep 1. La section « Avant » Rep 3 de l'enveloppe de section constante « tunnel » Rep 1 encapsulant le véhicule Rep B, selon les effets de design recherchés, peut être plus ou moins inclinée sur l'axe de ladite enveloppe ; la section de sortie « Arrière » de l'enveloppe « tunnel » Rep 4 sera conçue en intégrant les composants de parallélisation du flux aéraulique Rep P1 et Rep P2 à l'arrière du véhicule automobile Rep B. Dans le cas précis de véhicules terrestres (automobiles, camions, ...) ce dispositif de parallélisation « arrière » pourra être conçu de façon à contribuer à l'adhérence au sol des dits mobiles en infléchissant par le haut, la trajectoire du flux « arrière » éjecté de façon à développer une force spécifique d'appui au sol ; cette force pourra être constante ou être modulée par asservissements ou par action de pilotage.

Les dispositions constructives décrites peuvent aussi s'appliquer aux mobiles s'apparentant aux ensembles mobiles constitués d'unités mobiles compartimentées accrochées les unes aux autres (ex : wagons ou voitures). Sur ce type de mobiles pour lesquels la longueur globale est très supérieure aux dimensions de la section nette, les surfaces en contact avec le flux d'écoulement laminaire développé par l'adjonction d'une enveloppe externe segmentée, développent des forces de contact et de freinage (en écoulement laminaire) telles que l'efficacité du dispositif décrit pourrait être remis en cause.

Une conception nouvelle de ces modes de transport, développée pour de nouvelles lignes et de nouveaux réseaux de transport non assujettis à des contraintes de gabarits permettra de développer des mobiles s'apparentant aux ensembles mobiles constitués de mobiles compartimentés accrochés les uns aux autres et qui répondent aux points techniques 1 à 5 avec une « variante-dérogation », relative au principe de la faible conicité de l'enveloppe externe (non applicable). Dans cette application considérée, cette continuité sera segmentée à la longueur des modules (ex : Wagons) constitutifs de l'ensemble de ladite unité mobile.

Une disposition constructive divulguée pour ce type de mobile à section externe à très faible conicité ou quasi-constante par segments, intégrant un ou une pluralité de tunnels aérodynamiques internes, pouvant être segmentés, consiste à équiper ce ou ces tunnels de moyens propulsifs, placés dans chacun des modules du mobile segmenté, mais aussi et préférentiellement dans le segment de queue, agissant globalement sur la/les veines d'air canalisées par aspiration dépressionnaire frontale, sous l'action d'un ou plusieurs dispositifs ventilo-compresseurs « avant » placés prioritairement à l'avant du module de tête de l'ensemble constitué ; leur intégration et leur efficacité s'entend comme étant dépendante de la structure « avant » du ou des canaux internes à alimenter à partir de la « totalité de la surface frontale » de la dite unité.

Une proportion notable des adaptations des dispositifs divulgués appliqués aux mobiles « véhicules » connus, pour des raisons évidentes de maîtrise de leur conduite, notamment « vision directe » de l'environnement extérieur, sera réalisée au moins partiellement, notamment latéralement, en matériaux transparents adaptés. Cette disposition constructive « transparente » sur la partie « Avant » et sur les parois latérales de l'enveloppe formant le cylindre extérieur à très faible conicité du mobile constitué est une variante des unités mobiles divulguées.

La segmentation par anneaux successifs d'entrées fluide décalées en gradin du tunnel extérieur appliqué aux mobiles connus, est une extension appliquée de la construction de base « enveloppe extérieure à faible conicité, ou de section quasi-constante, associée à un ou plusieurs canaux fluidiques internes » divulguée. Ce modèle particulier de construction qui segmente les entrées fluidiques en bandes ou anneaux successifs, ou en une succession d'entrées décalées les unes des autres contribuant à maitriser le flux de la veine fluide qui s'oppose au déplacement du dit mobile est une disposition constructive, variante de la construction de base décrite précédemment. La Figure. 08/10 (« 08-1 Vue Frontale » et « 08-2 Vue de côté ») représente un mobile connu, ex- « automobile », mis en « conduit-canal » dont l'entrée est segmentée en deux sous-canaux constitués, l'un plus petit que l'enveloppe externe, l'autre plus petit que le premier sous-canal. L'ensemble constitué canalise progressivement les flux aérauliques se présentant frontalement au mobile de base connu et participe à la définition de l'unité mobile.

La variante constructive en bandes ou anneaux successifs décalés en gradins, décomposant en éléments associés l'entrée « canal » de l'unité mobile ainsi conçue, est applicable à des structures rigides et/ou déformables semi-rigides ou souples dont la mise en forme définitive par effet de pression « avant » s'effectue automatiquement à partir d'un seuil de pression et/ou de vitesse, les deux étant liés selon les lois de la mécanique des fluides. Ce type de structure d'entrée canalisante déformable, en forme de conduits souples superposés, constitués de membranes enveloppantes reliées entre elles par des cloisons souples, associées, pour former globalement une entrée « canal » segmentée de l'unité mobile ou multicanaux, est aussi décrite.

La prise en compte de cette variante constructive d'entrée « canal » segmentée induit aussi une variation constructive de la partie descendante du dit canal qui peut être construit soit en autant de sous-canaux qu'il y a de segments dans l'entrée canalisante, soit en sous-canaux descendants, lesquels peuvent être de longueurs différentes, qui regroupent les flux de plusieurs segments « entrées » tels que décrits ci-dessus. Cette disposition constructive élaborée par expérimentation, qui ne fait pas appel à l'exploitation de dispositifs internes de motorisation, (la force propulsive étant externe), ni à des asservissements par capteurs dépressionnaires (Rep CPA- ), est aussi décrite.

### 6. Domaines d'applications

La constitution innovante d'unités mobiles à enveloppe « fuselage » externe et canaux internes motorisés, tels que décrits précédemment amène à des conceptions innovantes
- D'unités mobiles totalement nouvelles propres aux domaines aéronautique, spatial, maritime, sous-marin, du transport terrestre, des équipements ( vêtements) sportifs,
- D'unités mobiles « connues » dont la technicité est établie dans tous les domaines d'applications pratiques, adaptées ou réadaptées sur les bases des principes de constructions proposés et décrits, dans l'aéronautique, le secteur maritime, les moyens de transports terrestres, ... (Liste non limitative).

Les dispositions constructives décrites ci-dessus en segmentation de l'entrée « canal » sont applicables
- aux mobiles connus déjà listés, adaptés, modifiés pour intégrer une enveloppe extérieure
- Pour les mobiles en appui sur le sol (automobiles, camions, ...) dont la motricité de conception initiale connue (par exemple par « trains de roues » motorisés) peut être conservée comme telle ou adaptée à une distribution d'énergie vers les accélérateurs de flux Rep AF décrits ci-dessus , eux-mêmes pilotés (ou non) par un asservissement conduit sur la base d'informations de « dépression-pression » frontale « avant » fournies par les capteurs Rep CPA .
   ∘ A des équipements portés ou disposés en peaux comme des « survêtements »
   ∘ A tous les modèles réduits connus, y compris les jouets, adaptés par une mise en oeuvre des conceptions innovantes décrites.

## Revendications

1. Unité mobile, autre qu'un dirigeable, motorisée, consistant en 4 sous-ensembles indissociables A,B,C,D :
A) une enveloppe extérieure « fuselage », de section plus grande à l'avant qu'à l'arrière, ou constante, aplatie sur sa face ventrale, de longueur finie supérieure à la plus grande dimension transversale nette de ladite enveloppe extérieure « fuselage » ,
B) une pluralité de canaux internes et au moins un canal interne motorisé, les dits canaux internes traversent longitudinalement ladite unité mobile, et sont incorporés dans le volume de l'enveloppe extérieure « fuselage », de façon à assurer la circulation interne de la quasi « totalité du fluide » s'opposant au déplacement frontal de la dite unité mobile, le dit au moins un canal interne motorisé étant équipé d'un ou plusieurs dispositifs propulsifs de motorisation interne centrale, complété(s) d'un équipement amont et d'un équipement aval, asservis de façon à ce que les vitesses et pressions du flux global sortant dudit au moins un canal interne motorisé , soient supérieures aux vitesses et pressions du flux global entrant, ledit au moins un canal interne motorisé présentant, successivement, dans le sens de la circulation interne du fluide transféré,
C)
□ un ensemble de portions d'entrée de sections convergentes (Rep'3+2+21'),
□ un ensemble de portions intermédiaires de section constante (Rep'21+2+22'), et
□ un ensemble de portions finales de sortie, de sections divergentes (Rep '22+2+4'),
□ une portion d'entrée de section convergente dudit au moins un canal interne motorisé (Rep'3+2+21'), comprenant :
• des dispositifs « ventilo-compresseurs » en applications aérauliques ou
• des dispositifs d'accélérateur de flux (Rep AF1 et AF4) en applications hydrauliques,
• des capteurs de pression différentielle entre flux entrant et flux environnant externe (Rep CPA), montés sur le bord d'attaque frontal séparatif entre flux environnant et flux admis dans chacun des dits canaux internes,
□ une portion intermédiaire de section constante comprenant :
• un ou plusieurs dispositifs de motorisation, propulsifs, agissant directement sur la veine fluide canalisée par ledit au moins un canal interne motorisé et positionnés le long de la portion intermédiaire dudit au moins un canal interne motorisé,
• une enveloppe secondaire canalisante optionnelle (Rep 'GTS'), qui conduit en interne, autour de chaque veine fluidique motorisée, un flux concentrique, amortissant,
□ une portion finale de sortie de sections divergentes située en aval de chaque canal interne motorisé de l'unité mobile, s'étendant de la sortie des portions intermédiaires jusqu'à l'extrémité arrière de l'enveloppe « fuselage » « externe », et comprenant
o des dispositifs capteurs d'énergie, tels que des turbines, et générateurs électriques
o des diffuseurs, et
o des parallélisateurs du/ des flux sortant des portions intermédiaires motorisées et du flux canalisé par l'enveloppe secondaire canalisante optionnelle (Rep 'GTS'),
D) un ensemble de volumes internes « disponibles » entre l'enveloppe « fuselage » externe et la globalité des volumes internes occupés par les dits canaux internes fluidiques et leurs équipements fonctionnels, structuré en sous-ensembles techniques d'exploitation des dites unités mobiles.

2. Unité mobile selon la revendication 1, **caractérisée en ce que** ledit dispositif de motorisation adapté dudit au moins un canal interne motorisé est placé directement dans le ou les canaux internes motorisés fluidiques ou dans des compartiments disposés latéralement à ceux-ci, ledit dispositif de motorisation comprenant :
• une turbine, une pompe, ou une combinaison de ces équipements pour créer dans un fluide environnant traversé « incompressible », un effet d' « accélérateurs » de flux (Rep « AF»)
• un « accélérateur-compresseur » sur une veine fluide frontale-entrant à l'avant dudit au moins un canal interne motorisé (Rep 'RC1 - RC2 - RC3'), pour un fluide environnant « compressible » puis,
• un moteur « accélérateur » sur la veine fluide en transit dans la section intermédiaire (Rep'M1-M2-M3'), et
• une « Turbine- diffuseur-détendeur-et parallélisateurs de flux » (Rep 'T, P1, P2') dans la section de sortie divergente, (Rep '4').

3. Unité mobile selon l'une quelconque des revendications 1 et 2 **caractérisée en ce que**, pour des applications aérauliques, tels que aéronautiques, ledit au moins un canal interne motorisé (Rep '2') ou lesdits canaux internes motorisés comprennent un ou plusieurs dispositifs de motorisation (Rep 'M1-M2-M3') « allongés », s'étendant sur la quasi-totalité de la longueur de la portion intermédiaire desdits canaux.

4. Unité mobile selon l'une quelconque des revendications 1 et 2, **caractérisée en ce que** ledit au moins un canal interne motorisé, (Rep 2), dans la portion de sortie (Rep '22-2-4'), comprend une pluralité de dispositifs de parallélisation (Rep 'P1, P2') de la/ des veines fluides en voie d'éjection « arrière »(Rep FS) ; optionnellement, ces dispositifs de parallélisation, en application à des milieux hydrauliques ou mixtes, peuvent aussi être installés dans les portions d'entrée (Rep '3-2-21').

5. Unité mobile selon l'une quelconque des revendications 1, 2 et 4, **caractérisée en ce que**
□ A.) l'enveloppe extérieure « fuselage » (Rep 1) de l'unité mobile comprend une pluralité de canaux internes motorisés (Rep 'C1+C2+C3+C4'), sensiblement parallèles qui peuvent être de longueurs différentes,
□ B.) la section d'entrée frontale de l'enveloppe « fuselage » externe est égale à la somme des sections frontales d'entrées des canaux internes motorisés intégrés (Rep `C1-3+C2-3+C3-3+C4-3') d'une construction « multicanaux » et ladite section de sortie de la dite enveloppe » fuselage » externe est égale à la somme des sections de sortie (Rep `C1-4+C2-4+C3-4+C4-4') desdits canaux internes motorisés,
□ C.) le nombre de canaux dits « entrants » est différent du nombre des canaux dits « sortants » permettant aux flux intermédiaires des dits canaux de se mélanger et être associés, et
□ D.) les canaux internes motorisés sont subdivisés en canaux secondaires dont les flux correspondants pilotés, sont utilisés pour contribuer soit-à des effets permanents d'isolation thermique et/ou acoustique et/ou de flux concentrique, soit au développement d'actions intermittentes ou temporaires.

6. Unité mobile selon l'une quelconque des revendications 1-2 et 4 à 5, **caractérisée en ce qu'**elle présente un bord d'attaque pour l'entrée du fluide dans ledit au moins un canal interne motorisé (Rep 2 (A/1-A/2, B/1-B/2)) ou un ensemble de bords d'attaque (Rep (2 -A/1-A/2-B/1 -B/2)), l'angle formé entre le profil de l'enveloppe « fuselage » externe et le profil de la première partie canalisante du ou des canaux internes motorisés est minimum de 5 degrés (Rep 'A-1/2'), et l'arête frontale de ce bord d'attaque n'est pas perpendiculaire à l'axe longitudinal de l'unité mobile constituée et peut avoir un profil non-linéaire, voir sinusoïdal.

7. Unité mobile selon l'une des revendications 1-2 et 4 à 6, **caractérisée en ce qu'**elle comprend au moins un compartiment ou une pluralité de compartiments (Rep (A1-A2-B1-B2-B3-B4-C1- C2-D1-D2-F1-F2-G1-G2)) ménagés, architecturés entre ladite enveloppe « fuselage » extérieure (Rep(1)) et les dits canaux internes (Rep (2)) pour former:
□ une cellule de pilotage ou de contrôle de trajectoire et de supervision du fonctionnement général, et
□ des compartiments spécifiques techniques.

8. Unité mobile selon les revendications 1 , 2 et 4 à 7, **caractérisée en ce qu'**elle comprend une « enveloppe » gaine externe, (Rep 1) dans laquelle est fixé un ou plusieurs objets (Rep (B)) La dite enveloppe gaine externe, comprenant
- une surface extérieure définissant le contour externe « fuselage » (Rep (1)) de la dite unité mobile, et
- une surface intérieure de ladite gaine définissant, avec les surfaces externes du ou des dits objets incorporés ( Rep (B)) lesdites portions d'entrée, intermédiaires et de sortie dudit au moins un canal interne motorisé.

9. Unité mobile selon les revendications 1 , 2 et 4 à 8, **caractérisée en ce que** ledit au moins un canal interne motorisé comprend une pluralité de sections d'entrée (Rep (3)) successives, formant des sous-canaux, disposées de façon imbriquée et étagée depuis l'extrémité la plus en amont du ou des objets incorporés (Rep B), vers à la fois ladite enveloppe extérieure (Rep (1)) et l'aval de l'unité mobile qui peut aller au-delà de la terminaison du ou des objets incorporés (Rep (4)).

10. Unité mobile selon l'une quelconque des revendications 1 à 9, **caractérisée en ce qu'**elle comprend des motorisations allongées qui entraînent directement ou indirectement « des turbines » qui permettent le développement de ressources électriques nécessaires à l'entrainement indirect des « ventilo-compresseurs avant » et/ou aux fonctions internes.

11. Unité mobile selon l'une quelconque des revendications 1-2 et 4 à 9, **caractérisée en ce que** la surface de l'enveloppe « fuselage » externe comprend, par zones spécifiques, des caissons plats, totalement intégrés dans le volume contenu dans l'enveloppe « fuselage » externe, pressurisés et alimentés temporairement soit par déviation d'une partie des flux sortants, captés après motorisation, haute pression, soit alimentés par des surpresseurs d'air, munis d'une multitude de points d'échappement fluide, régulièrement répartis, agissant comme des mini ou micro-tuyères.

12. Unité mobile selon la revendications 11, **caractérisée en ce qu'**elle est « sans trains de roues ».

13. Unité mobile selon l'une quelconque des revendications 1 à 12, **caractérisée en ce qu'**elle est configurée pour passer d'un mode supersonique à un mode « spatial » par une injection progressive dans les dispositifs propulsifs, d'oxygène pur embarqué , ou d'un autre comburant que l'oxygène.

14. Unité mobile selon l'une quelconque des revendications 1 à 13, **caractérisée en ce qu'**elle est structurée en
- un module central et
- des segments ou modules indépendants détachables par étapes.

15. Unité mobile selon l'une quelconque des revendications 1 à 14, **caractérisée en ce qu'**elle comprend en outre, des équipements rétractables dans l'enveloppe « fuselage » externe, tels que :
□ voilures, gouvernails et ailerons (Rep (A-R) et Rep (G)),
□ trains de roues ou dispositifs d'appui au sol,
□ tuyères d'éjection latérale, ou perpendiculaire à l'enveloppe « fuselage » externe d'une partie du flux « entrant »,
□ capteurs venant en saillie et à l'extérieur de l'enveloppe externe,
□ dispositifs motorisés spécifiques, rétractables qui permettent l'amorçage d'un mouvement perpendiculaire à l'axe longitudinal principal de la dite unité mobile ;
□ dispositif de mise en protection provisoire ou permanente, totale ou partielle de l'ensemble des entrées frontales de la dite unité mobile contre des objets portés par le flux entrant (Rep FE1) actionnés automatiquement sous l'impulsion d'un détecteur approprié.

## Patentansprüche

1. Mobile Einheit, außer einem Luftschiff, motorisiert, bestehend aus 4 (vier) untrennbaren Unterbaugruppen A, B, C, D:
A) eine äußere "Rumpf"-Hülle mit größerem Querschnitt vorne als hinten oder konstantem, an der Bauchseite abgeflachtem Querschnitt und einer Endlänge, die größer ist als die größte Nettoquerabmessung der äußeren "Rumpf"-Hülle,
B) eine Vielzahl von Innenkanälen und mindestens einen motorisierten Innenkanal, **dadurch gekennzeichnet, dass** die Innenkanäle in Längsrichtung durch die mobile Einheit verlaufen und in das Volumen der äußeren "Rumpf"-Hülle integriert sind, um den Innenbereich zu gewährleisten Zirkulation nahezu "der gesamten Flüssigkeit", die der Frontalverschiebung der mobilen Einheit entgegenwirkt,
wobei der mindestens eine motorisierte interne Kanal mit einer oder mehreren zentralen internen motorischen Antriebsvorrichtungen ausgestattet ist, ergänzt durch vorgeschaltete Geräte und nachgeschaltete Geräte, die so gesteuert werden, dass die Geschwindigkeiten und Drücke der globalen Strömung, die von dem mindestens einen motorisierten internen Kanal ausgeht, gleich sind größer als die Geschwindigkeiten und Drücke der globalen einströmenden Strömung,
wobei der mindestens eine motorisierte interne Kanal nacheinander in Richtung der internen Zirkulation des übertragenen Fluids verläuft,
C)
• eine Reihe von Eingangsabschnitten konvergierender Abschnitte (Rep'3+2+21'),
• eine Reihe von Zwischenabschnitten mit konstantem Querschnitt (Rep'21+2+22') und
• eine Reihe von letzten Ausstiegsabschnitten, divergenten Abschnitten (Rep "22+2+4"),
• einen konvergierenden Abschnittseinlassabschnitt des mindestens einen motorisierten internen Kanals (Rep'3+2+21'), umfassend:
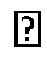 "Ventilator-Kompressor"-Geräte in Luftfahrtanwendungen oder
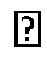 Strömungsbeschleunigergeräte (Rep AF1 und AF4) in hydraulischen Anwendungen,
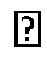 Differenzdrucksensoren zwischen eingehender Strömung und äußerer Umgebungsströmung (Rep CPA), montiert an der vorderen Vorderkante, die zwischen der Umgebungsströmung und der in jeden der internen Kanäle eingelassenen Strömung trennt,
• ein Zwischenabschnitt mit konstantem Querschnitt, bestehend aus:
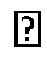 eine oder mehrere Motorisierungsvorrichtungen, Treibmittel, die direkt auf die Fluidader wirken, die durch den mindestens einen motorisierten Innenkanal geleitet wird und entlang des Zwischenabschnitts des mindestens einen motorisierten Innenkanals positioniert ist,
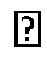 eine optionale kanalisierende Sekundärhülle (Rep "GTS"), die intern um jede motorisierte Fluidader herum einen konzentrischen, dämpfenden Fluss leitet,
• einen letzten Ausgangsabschnitt divergierender Abschnitte, der sich stromabwärts jedes motorisierten Innenkanals der mobilen Einheit befindet und sich vom Ausgang der Zwischenabschnitte bis zum hinteren Ende der "äußeren" "Rumpf"-Hülle erstreckt und umfasst
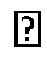 Energiesensorgeräte (Turbine) und elektrische Generatoren
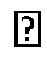 Rundfunkveranstalter und
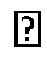 Parallelisierer der Strömung(en), die die motorisierten Zwischenteile verlassen, und der Strömungen, die von den kanalisierenden Sekundärhüllen kanalisiert werden (Rep "GTS"),
D) ein Satz "verfügbarer" Innenvolumina zwischen der äußeren "Rumpfhülle" und der Gesamtheit der Innenvolumina, die von den genannten internen Fluidkanälen und ihrer Funktionsausrüstung eingenommen werden, strukturiert in technische Unterbaugruppen für den Betrieb der genannten mobilen Einheiten.

2. Mobile Einheit nach Anspruch 1, **dadurch gekennzeichnet, dass** die Motorisierungsvorrichtung, angepasst an den mindestens einen Innenkanal, direkt in dem/den fluidischen motorisierten Innenkanälen oder in seitlich dazu angeordneten Fächern platziert ist, wobei die Motorisierungsvorrichtung Folgendes umfasst:
• eine Turbine, eine Pumpe oder eine Kombination dieser Geräte, um in einer "inkompressiblen" umgebenden Flüssigkeit einen Strömungsbeschleunigereffekt zu erzeugen (Rep "AF")
• ein "Beschleuniger-Kompressor" an einer frontalen Flüssigkeitsvene, die an der Vorderseite des mindestens einen motorisierten internen Kanals (Rep "RC1 - RC2 - RC3") eintritt, für eine "komprimierbare" umgebende Flüssigkeit Dann,
• ein "Beschleuniger"-Motor an der Flüssigkeitsvene während des Transports im Zwischenabschnitt (Rep "M1-M2-M3") und
• ein "Turbine-Diffusor-Expander und Strömungsparallelisator" (Rep "T, P1, P2") im divergenten Auslassabschnitt (Rep "4").

3. Mobile Einheit nach einem der Ansprüche 1 und 2, **dadurch gekennzeichnet, dass** für Luftfahrtanwendungen wie die Luftfahrt der mindestens eine motorisierte Innenkanal (Rep '2') oder die motorisierten Innenkanäle eine oder mehrere Motorisierungen (Rep '2') umfassen 'M1-M2-M3') "länglich" und erstrecken sich fast über die gesamte Länge des Zwischenabschnitts der Kanäle.

4. Mobile Einheit nach einem der Ansprüche 1 und 2, **dadurch gekennzeichnet, dass** der mindestens eine interne motorisierte Kanal (Rep 2) im Auslassabschnitt (Rep '22-2-4') mehrere Parallelisierungsvorrichtungen (Rep "P1, P2") der Flüssigkeitsvene(n) im "hinteren" Auswurfpfad (Rep FS); Optional können diese Parallelisierungsvorrichtungen bei Anwendung in hydraulischen oder gemischten Umgebungen auch in den Einlassabschnitten installiert werden (Rep. "3-2-21").

5. Mobile Einheit nach einem der Ansprüche 1, 2 und 4, **dadurch gekennzeichnet**
• A.) Die "Rumpf"-Außenhülle (Rep 1) der mobilen Einheit umfasst eine Vielzahl motorisierter Innenkanäle (Rep "C1+C2+C3+C4"), die im Wesentlichen parallel sind und unterschiedliche Längen haben können.
• B.) Der frontale Eingangsabschnitt der äußeren "Rumpf"-Hülle ist gleich der Summe der frontalen Eingangsabschnitte der integrierten motorisierten internen Kanäle (Rep 'C1-3+C2-3+C3-3+C4-3') ) einer "Mehrkanal"-Konstruktion und der Ausgangsabschnitt der äußeren "Rumpf"-Hülle ist gleich der Summe der Ausgangsabschnitte (Rep 'C1-4+C2-4+C3-4+C4-4') von besagte interne motorisierte Kanäle.
• C.) die Anzahl der sogenannten "eingehenden" Kanäle unterscheidet sich von der Anzahl der sogenannten "ausgehenden" Kanäle, wodurch die Zwischenströme dieser Kanäle gemischt und verknüpft werden können, und
• D.) Die motorisierten Innenkanäle werden in sekundäre Kanäle unterteilt, deren entsprechende angetriebene Strömungen dazu genutzt werden, entweder zu dauerhaften Wirkungen der thermischen und/oder akustischen Isolierung und/oder konzentrischen Strömungen beizutragen oder zur Entwicklung intermittierender oder vorübergehender Wirkungen beizutragen;

6. Mobile Einheit nach einem der Ansprüche 1-2 und 4 bis 5, **dadurch gekennzeichnet, dass** sie eine Vorderkante für den Eintritt des Fluids in den mindestens einen motorisierten Innenkanal (Rep 2 (A/1-A/2) aufweist, B/1-B/2)) oder ein Satz Vorderkanten (Rep (2-A/1-A/2-B/1-B/2)), Wie zum Beispiel:
• der Winkel zwischen dem Profil der äußeren "Rumpfhülle" und dem Profil des ersten Kanalisierungsteils des/der motorisierten inneren Flüssigkeitskanal(s) mindestens 5 Grad beträgt (Rep "A-1/2"), und
• Die Vorderkante dieser Vorderkante verläuft nicht senkrecht zur Längsachse der zusammengesetzten mobilen Einheit und kann ein nichtlineares, sogar sinusförmiges Profil aufweisen.

7. Mobile Einheit nach einem der Ansprüche 1-2 und 4 bis 6, **dadurch gekennzeichnet, dass** sie mindestens ein Fach oder mehrere Fächer (Rep (A1-A2-B1-B2-B3-B4-C1-C2 -D1-) umfasst. D2-F1-F2-G1-G2)) bereitgestellt, strukturiert zwischen der äußeren "Rumpf"-Hülle (Rep (1)) und den inneren Kanälen (Rep (2)), um Folgendes zu bilden:
• eine Steuer- oder Flugbahnkontrollzelle und Überwachung des allgemeinen Betriebs und
• Spezielle technische Fächer.

8. Mobile Einheit nach den Ansprüchen 1, 2 und 4 bis 7, **dadurch gekennzeichnet, dass** sie eine äußere "Hülle" (Rep 1) umfasst, in der ein oder mehrere Objekte (Rep (B)) befestigt sind. Die äußere Hülle umfasst:
• eine Außenfläche, die die "Rumpf"-Außenkontur (Rep (1)) der mobilen Einheit definiert, und
• eine Innenfläche der Hülle definiert zusammen mit den Außenflächen des/der eingebauten Objekte (Rep (B)) die Einlass-, Zwischen- und Auslassabschnitte des mindestens einen internen motorisierten Kanals.

9. Mobile Einheit nach den Ansprüchen 1, 2 und 4 bis 8, **dadurch gekennzeichnet, dass** der mindestens eine motorisierte Innenkanal mehrere aufeinanderfolgende Einlassabschnitte (Rep (3)) umfasst, die Unterkanäle bilden, überlappend angeordnet und abgestuft sind das stromaufwärtsste Ende des oder der eingebauten Objekte (Rep B), sowohl in Richtung des Außengehäuses (Rep (1)) als auch stromabwärts der mobilen Einheit, die über das Ende des/der eingebetteten Objekte(s) hinausgehen kann (Rep (4)) ).

10. Mobile Einheit nach einem der Ansprüche 1 bis 9, **dadurch gekennzeichnet, dass** sie "längliche" Motorisierungen umfasst, die direkt oder indirekt "Turbinen" antreiben, die die Entwicklung der für den indirekten Antrieb der "Ventilatoren" erforderlichen elektrischen Ressourcen ermöglichen. - Frontkompressoren" und/oder interne Funktionen.

11. Mobile Einheit nach einem der Ansprüche 1-2 und 4 bis 9, **dadurch gekennzeichnet, dass** die Oberfläche der äußeren "Rumpf"-Hülle in bestimmten Bereichen flache Kästen umfasst, die vollständig in das in der äußeren "Rumpf"-Hülle enthaltene Volumen integriert sind , unter Druck gesetzt und vorübergehend versorgt, entweder durch Umleitung eines Teils der austretenden Ströme, die nach der Motorisierung bei hohem Druck erfasst wurden, oder durch Luftverstärker, ausgestattet mit einer Vielzahl von Flüssigkeitsauslasspunkten, die regelmäßig verteilt sind und als Mini- oder Mikrodüsen fungieren.

12. Mobile Einheit nach Anspruch 11, **dadurch gekennzeichnet, dass** sie "ohne Radsätze" ist.

13. Mobile Einheit nach einem der Ansprüche 1 bis 12, **dadurch gekennzeichnet, dass** sie so konfiguriert ist, dass sie durch fortschreitende Injektion von reinem Bordsauerstoff oder einem anderen Oxidationsmittel als Sauerstoff in die Antriebsvorrichtungen von einem Überschallmodus in einen "Weltraum"-Modus übergeht.

14. Mobile Einheit nach einem der Ansprüche 1 bis 13, **dadurch gekennzeichnet, dass** sie strukturiert ist
• ein zentrales Modul und
• Unabhängige Segmente oder Module, die stufenweise abnehmbar sind.

15. Mobile Einheit nach einem der Ansprüche 1 bis 14, **dadurch gekennzeichnet, dass** sie außerdem einziehbare Ausrüstung in der äußeren "Rumpf"-Hülle umfasst, wie zum Beispiel:
• Flügel, Ruder und Querruder (Rep (A-R) und Rep (G)),
• Radsätze oder Bodenstützgeräte,
• seitliche Ausstoßdüsen oder senkrecht zur äußeren "Rumpfhülle" eines Teils der "einströmenden" Strömung,
• Sensoren, die aus dem Außengehäuse herausragen und außerhalb davon liegen,
• spezifische, einziehbare motorisierte Vorrichtungen, die die Einleitung einer Bewegung senkrecht zur Hauptlängsachse der mobilen Einheit ermöglichen;
• Vorrichtung zum vorübergehenden oder dauerhaften, vollständigen oder teilweisen Schutz aller Vordereingänge der genannten mobilen Einheit vor Gegenständen, die von der einströmenden Strömung mitgeführt werden (Rep FE1), die automatisch durch den Impuls eines geeigneten Detektors aktiviert wird.

## Claims

1. Mobile unit, other than an airship, motorized, consisting of 4 (four) inseparable sub-assemblies A, B, C, D:
A) an outer "fuselage" envelope, of larger section at the front than at the rear, or constant, flattened on its ventral face, of a finished length greater than the greatest net transverse dimension of said outer "fuselage" envelope,
B) a plurality of internal channels and at least one motorized internal channel, **characterized in that** the said internal channels pass longitudinally through the said mobile unit, and are incorporated into the volume of the outer "fuselage" envelope, to ensure the internal circulation of almost "all of the fluid" opposing the frontal displacement of said mobile unit,
the said at least one motorized internal channel being equipped with one or more central internal motor propulsion devices, supplemented by upstream equipment and downstream equipment, controlled so that the speeds and pressures of the flow global outgoing from said at least one motorized internal channel, are greater than the speeds and pressures of the global incoming flow, said at least one motorized internal channel presenting, successively, in the direction of the internal circulation of the transferred fluid,
C)
• a set of entrance portions of converging sections (Rep '3+2+21'),
• a set of intermediate portions of constant section (Rep '21+2+22'), and
• a set of final exit portions, divergent sections (Rep '22+2+4'),
• a converging section inlet portion of said at least one motorized internal channel (Rep '3+2+21'), comprising:
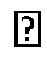 "fan-compressor" devices in aeraulic applications or
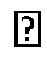 flow accelerator devices (Rep AF1 and AF4) in hydraulic applications,
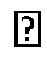 differential pressure sensors between incoming flow and external surrounding flow (Rep CPA), mounted on the front leading edge separating between surrounding flow and flow admitted into each of said internal channels,
• an intermediate portion of constant section comprising:
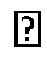 one or more motorization devices, propellants, acting directly on the fluid vein channeled by said at least at least one motorized internal channel and positioned along the intermediate portion of said at least one motorized internal channel,
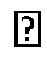 an optional channeling secondary envelope (Rep 'GTS'), which conducts internally, around each motorized fluidic vein, a concentric, damping flow,
• a final exit portion of diverging sections located downstream of each motorized internal channel of the mobile unit, extending from the exit of the intermediate portions to the rear end of the "external" "fuselage" envelope, and including
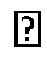 energy sensor devices (turbine) and electric generators
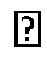 broadcasters, and
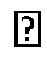 parallelizers of the flow(s) leaving the motorized intermediate portions and the flows channeled by the channeling secondary envelopes (Rep 'GTS'),
D) a set of "available" internal volumes between the external "fuselage" envelope and the totality of the internal volumes occupied by the said internal fluidic channels and their functional equipment, structured into technical sub-assemblies for the operation of the said mobile units.

2. Mobile unit according to Claim 1, **characterized in that** the said motorization device, adapted to the said at least one internal channel, is placed directly in the fluidic motorized internal channel(s) or in compartments arranged laterally thereto, the said motorization device comprising:
• a turbine, a pump, or a combination of these equipments to create in an "incompressible" surrounding fluid, a flow "accelerators" effect (Rep "AF")
• an "accelerator-compressor" on a frontal fluid vein entering at the front of said at least one motorized internal channel, (Rep 'RC1 - RC2 - RC3'), for a "compressible" surrounding fluid Then,
• an "accelerator" motor on the fluid vein in transit in the intermediate section (Rep 'M1-M2-M3'), and
• a "Turbine-diffuser-expander-and flow parallelizers" (Rep 'T, P1, P2') in the divergent outlet section, (Rep '4').

3. Mobile unit according to either of Claims 1 and 2, **characterized in that**, for aeraulic applications, such as aeronautics, the said at least one motorized internal channel (Rep '2') or the said motorized internal channels comprise one or more motorization (Rep 'M1-M2-M3') "elongated", extending over almost the entire length of the intermediate portion of said channels.

4. Mobile unit according to either of Claims 1 and 2, **characterized in that** the said at least one internal motorized channel (Rep 2), in the outlet portion (Rep '22-2-4'), comprises a plurality of devices parallelization (Rep 'P1, P2') of the fluid vein(s) in the "rear" ejection path (Rep FS); optionally, these parallelization devices, in application to hydraulic or mixed environments, can also be installed in the inlet portions (Rep '3-2-21').

5. Mobile unit according to any one of Claims 1, 2 and 4, **characterized in that**
• A.) the "fuselage" outer envelope (Rep 1) of the mobile unit comprises a plurality of motorized internal channels (Rep 'C1+C2+C3+C4'), substantially parallel which may be of different lengths,
• B.) the frontal input section of the external "fuselage" envelope is equal to the sum of the frontal input sections of the integrated motorized internal channels (Rep 'C1-3+C2-3+C3-3+C4-3') of a "multi-channel" construction and said output section of said external "fuselage" envelope is equal to the sum of the output sections (Rep 'C1-4+C2-4+C3-4+C4-4') of said internal motorized channels.
• C.) the number of so-called "incoming" channels is different from the number of so-called "outgoing" channels allowing the intermediate flows of said channels to mix and be associated, and
• D.) the motorized internal channels are subdivided into secondary channels whose corresponding driven flows are used to contribute either to permanent effects of thermal and/or acoustic insulation and/or concentric flows, or to the development of intermittent or temporary actions.

6. Mobile unit according to any one of claims 1-2 and 4 to 5, **characterized in that** it has a leading edge for the entry of the fluid into the said at least one motorized internal channel (Rep 2 (A/1- A/2, B/1-B/2)) or a set of leading edges (Rep (2-A/1-A/2-B/1-B/2)),
Such as:
• the angle formed between the profile of the external "fuselage" envelope and the profile of the first channeling part of the motorized internal fluid channel(s) is a minimum of 5 degrees (Rep 'A-1/2'), and
• the front edge of this leading edge is not perpendicular to the longitudinal axis of the constituted mobile unit and may have a non-linear, even sinusoidal profile.

7. Mobile unit according to one of claims 1-2 and 4 to 6, **characterized in that** it comprises at least one compartment or a plurality of compartments (Rep (A1-A2-B1-B2-B3-B4-C1-C2 -D1-D2-F1-F2-G1-G2)) provided, structured between said outer "fuselage" envelope (Rep (1)) and said internal channels (Rep (2)) to form:
• a steering or trajectory control cell and supervision of general operation, and
• specific technical compartments.

8. Mobile unit according to claims 1, 2 and 4 to 7, **characterized in that** it comprises an outer sheath "envelope", (Rep 1) in which is fixed one or more objects (Rep (B))
Said outer sheath envelope, comprising:
• an outer surface defining the "fuselage" outer contour (Rep (1)) of said mobile unit, and
• an inner surface of said sheath defining, with the outer surfaces of said incorporated object(s) (Rep (B)) said inlet, intermediate and outlet portions of said at least one internal motorized channel.

9. Mobile unit according to Claims 1, 2 and 4 to 8, **characterized in that** the said at least one motorized internal channel comprises a plurality of successive inlet sections (Rep (3)), forming sub-channels, arranged in an overlapping and stepped from the most upstream end of the incorporated object or objects (Rep B), towards both said outer casing (Rep (1)) and downstream of the mobile unit which can go beyond the termination of the embedded object(s) (Rep (4)).

10. Mobile unit according to any one of Claims 1 to 9, **characterized in that** it comprises "elongated" motorizations which directly or indirectly drive "turbines" which allow the development of electrical resources necessary for the indirect drive of the "fans". -front compressors" and/or internal functions.

11. Mobile unit according to any one of claims 1-2 and 4 to 9, **characterized in that** the surface of the external "fuselage" envelope comprises, in specific areas, flat boxes, totally integrated into the volume contained in the external "fuselage" envelope, pressurized and temporarily supplied either by diversion of part of the outgoing flows captured after motorization at high pressure, or supplied by air boosters, equipped with a multitude of fluid exhaust points, regularly distributed , acting as mini or micro nozzles.

12. Mobile unit according to Claim 11, **characterized in that** it is "without wheel sets".

13. Mobile unit according to any one of Claims 1 to 12, **characterized in that** it is configured to pass from a supersonic mode to a "space" mode by progressive injection, into the propulsion devices, of pure onboard oxygen, or an oxidizer other than oxygen.

14. Mobile unit according to any one of Claims 1 to 13, **characterized in that** it is structured in
• a central module and
• independent segments or modules detachable in stages.

15. Mobile unit according to any one of Claims 1 to 14, **characterized in that** it also comprises retractable equipment in the external "fuselage" envelope, such as:
• wings, rudders and ailerons (Rep (A-R) and Rep (G)),
• wheel sets or ground support devices,
• lateral ejection nozzles, or perpendicular to the outer "fuselage" envelope of part of the "incoming" flow,
• sensors protruding from and outside the outer casing,
• specific, retractable motorized devices which allow the initiation of a movement perpendicular to the main longitudinal axis of said mobile unit;
• device for temporary or permanent, total or partial protection of all the front entrances of the said mobile unit against objects carried by the incoming flow (Rep FE1) automatically activated under the impulse of an appropriate detector.
